# EUROPEAN PATENT SPECIFICATION

(11) **EP 2 602 513 B1**
(45) Date of publication and mention of the grant of the patent: **22.10.2014**
(21) Application number: 12178658.6
(22) Date of filing: 31.07.2012
(51) Int. Cl.: F16H 55/56

(54) **Belt type continuously variable transmission**
Kontinuierlich variable Riemenübertragung
Transmission à variation continue du type courroie

(30) Priority: 09.12.2011 JP 2011270405; 06.02.2012 JP 2012023001
(43) Date of publication of application: 12.06.2013
(73) Proprietor: KANZAKI KOKYUKOKI MFG. CO., LTD., Amagasaki-shi, Hyogo 661-0981 (JP)
(72) Inventor: Ishino, Fumitoshi, Amagasaki-shi, Hyogo 661-0981 (JP); Nakagawa, Shigeaki, Amagasaki-shi, Hyogo 661-0981 (JP)
(74) Representative: Isarpatent

(56) References cited:
- US-A- 3 638 506
- US-A1- 2009 221 389

## Description

### BACKGROUND OF THE INVENTION

### Field of the Invention

The present invention relates to a belt type continuously variable transmission (hereinafter, referred to as CVT) including a driving pulley supported on a driving shaft, a driven pulley supported on a driven shaft, and an endless element such as V-belt passing between the pulleys, wherein a continuously speed change of the driven shaft is achieved by varying an effective diameter of the driving pulley and/or an effective diameter of the driven pulley.

### Related Art

There have been previously proposed various CVTs (see, for example, Japanese unexamined patent application publication H01-283454, which is hereinafter referred to as prior art document 1 or the US 2009/221389 A showing the features of the preamble of claim 1), each of which includes a driving pulley supported on a driving shaft, a driven pulley supported on a driven shaft and an endless element passing between the pulleys, wherein a rotational power which has been transmitted from the driving shaft to the driven shaft is continuously changed in speed by varying an effective diameter of the driving pulley and/or an effective diameter of the driven pulley. The effective diameter is a radial distance between a position on which the endless element runs in the corresponding pulley and an axial center of the corresponding shaft.

More specifically, the driving pulley includes a driving-side fixed pulley sheave supported on the driving shaft in a relatively non-rotatable manner with respect thereto and in an axially immovable manner, and a driving-side movable pulley sheave supported on the driving shaft in a relatively non-rotatable manner with respect thereto and in an axially movable manner only within a predetermined range, wherein the effective diameter of the driving pulley is changed in accordance with an axial movement of the driving-side movable pulley sheave.

Similarly, the driven pulley includes a driven-side fixed pulley sheave supported on the driven shaft in a relatively non-rotatable manner with respect thereto and in an axially immovable manner, and a driven-side movable pulley sheave supported on the driven shaft in a relatively no-rotatable manner with respect thereto and in an axially movable manner only within a predetermined range, wherein the effective diameter of the driven pulley is changed in accordance with an axial movement of the driven-side movable pulley sheave.

However, in the CVT disclosed in the prior art document 1, the fixed pulley sheave and the movable pulley sheave are totally different from each other in respective components, which result in a problem that cost reduction could not be achieved sufficiently.

In more details, the fixed and movable pulley sheaves include respective tubular portions and respective main body portions extending radially outward from the corresponding tubular portions.

The tubular portion of the fixed pulley sheave is inserted around the corresponding shaft, while the tubular portion of the movable pulley sheave is inserted around the tubular portion of the fixed pulley sheave. That is, in the configuration disclosed in the prior art document 1, the tubular portion of the fixed pulley sheave and the tubular portion of the movable pulley sheave have different dimensions with respect to inner and outer diameters.

The difference between the outer diameters of the tubular portions of the fixed pulley sheave and the movable pulley sheave also causes a difference of inner diameters between the main body portion fixed to the tubular portion of the fixed pulley sheave and the main body portion fixed to the tubular portion of the movable pulley sheave.

Furthermore, in the prior CVT, a braking function is not taken into consideration.

Accordingly, in order to apply a braking force to a travelling system power transmission path in which the CVT is arranged, it is needed to have a braking mechanism that is independent from the CVT, resulting in an enlargement and a cost increase in the traveling system power transmission path as a whole.

### SUMMARY OF THE INVENTION

In view of the prior art, it is a first object of the present invention to provide a belt type continuously variable transmission including a driving pulley that has a driving-side fixed pulley sheave and a driving-side movable pulley sheave and a driven pulley that has a driven-side fixed pulley sheave and a driven-side movable pulley sheave, the belt type continuously variable transmission capable of reducing a manufacturing cost by way of standardization of the four types of pulley sheaves with respect to structure.

It is a second object of the present invention to provide a belt type continuously variable transmission capable of applying a braking force to a traveling system power transmission path in which the continuously variable transmission is interposed while preventing the power transmission path from increasing in size and manufacturing cost as a whole.

In order to achieve the first object, the present invention provide a belt type continuously variable transmission that continuously varies a speed of a rotational power transmitted from a driving shaft to a driven shaft, the belt type continuously variable transmission including a driving-side fixed pulley sheave supported by the driving shaft in a relatively non-rotatable manner with respect thereto and in an axially immovable manner along an axis line, a driving-side movable pulley sheave supported by the driving shaft in a relatively non-rotatable manner with respect thereto and in an axially movable manner along the axis line only within a predetermined distance while facing the driving-side fixed pulley sheave, a driving-side biasing member pressing the driving-side movable pulley sheave toward the driving-side fixed pulley sheave, a driven-side fixed pulley sheave supported by the driven shaft in a relatively non-rotatable manner with respect thereto and in an axially immovable manner along an axis line, a driven-side movable pulley sheave supported by the driven shaft in a relatively non-rotatable manner with respect thereto and in an axially movable manner along the axis line only within a predetermined distance while facing the driven-side fixed pulley sheave, a driven-side biasing member pressing the driven-side movable pulley sheave toward the driven-side fixed pulley sheave and having a pressing force larger than the driving-side biasing member, a speed-change operating mechanism increasing the pressing force of the driving-side biasing member in response to an operating force from an outside, and an endless member having one side sandwiched by the driving-side fixed and movable pulley sheaves and the other side sandwiched by the driven-side fixed and movable pulley sheaves, wherein the four types of pulley sheaves are common one another in that each of them includes a pulley forming body having a tubular portion inserted around the corresponding shaft and a main body portion extending radially outward from one side of the tubular portion in an axis line direction, the main body portion including a conical friction surface inclined in such a manner as to be positioned closer to the other side of the tubular portion in the axis line direction as it goes from an inner side to an outer side in a radial direction, wherein the tubular portion of each of the pulley forming bodies that forms the driving-side and driven-side fixed pulley sheaves is provided with a fixing hole, and wherein the tubular portion of each of the pulley forming bodies that forms the driving-side and driven-side movable pulley sheaves is provided with a sliding slot that allows the tubular portion to move along the axis line of the corresponding shaft only within the predetermined distance.

The belt type continuously variable transmission according to the present invention can realize standardization of components as much as possible, thereby reducing a manufacturing cost.

In a preferable configuration, the tubular portion of each of the pulley forming bodies that forms the driving-side and driven-side fixed pulley sheaves may include a large diameter portion that is positioned on one side in an axis line direction and has a large diameter, and a small diameter portion that extends towards the other side in the axis line direction from the large diameter portion through a step and has a diameter smaller than that of the large diameter portion.

In one embodiment, the sliding slot provided at the tubular portion of the pulley forming body that forms the driven-side movable pulley sheave may include a cam region that allows the tubular portion to move from the one side to the other side in the axis line direction of the corresponding driven shaft and also causes the tubular portion to rotate from one side to the other side around the axis line of the driven shaft in response to the movement of the tubular portion from the one side to the other side in the axis line direction.

For example, the main body portion is made from a main body portion forming member, while the tubular portion is made from a tubular portion forming member that is separate from the main body portion forming member.

The main body portion forming member includes a radially-inward portion that is formed with a center hole having a predetermined diameter, and a radially-outward portion that extends radially outward from the radially-inward portion and has the friction surface, while the tubular portion forming member includes an inserted portion that is inserted into the center hole while being come into contact with an inner circumference surface of the center hole, and a flange portion that extends radially outward from one side of the inserted portion in the axis line direction.

The radially-inward portion includes an outer surface and an inner surface that faces to one direction same as and the other direction opposite to the friction surface with respect to the axis line direction.

In this case, the tubular portion forming member is fixed to the main body portion forming member in a state where the flange portion is come into contact with the outer surface and the inserted portion is inserted into the center hole, so that the inner surface of the radially-inward portion functions as a stopper that directly or indirectly engages with one end of the corresponding biasing member.

In a preferable configuration, the radially-inward portion is concaved from a radially inner end of the radially-outward portion, so that the flange portion of the tubular portion forming member is disposed within a concave portion defined by the radially-inward portion.

In any one configuration of the above-mentioned various configurations, the belt type continuously variable transmission preferably further includes plural engaged portions that are arranged over the whole outer peripheral edge of the main body portion of any one of the driving-side fixed pulley sheave, the driving-side movable pulley sheave, the driven-side fixed pulley sheave and the driven-side movable pulley sheave, the engaged portion being formed into a concave shape opening radially outward or a convex shape projecting radially outward, a brake actuating arm capable of being swung around a swinging axis line parallel to a rotational axis line of the one pulley sheave, and an engaging portion that is provided at the brake actuating arm and has a shape capable of engaging with the engaged portion.

The brake actuating arm can take a brake applying position and a brake released position around the swinging axis line in accordance with an operation from an outside, the brake actuating arm being positioned at the brake applying position so that the engaging portion engages with any one of the plural engaged portions, and being positioned at the brake released position so that the engaging portion is apart from the plural engaged portions.

The preferable configuration can achieve the second object.

That is, the preferable configuration can realize miniaturization and cost down for the traveling system power transmission path as a whole, in comparison with a conventional configuration including a brake mechanism independent from the belt type continuously variable transmission.

For example, the one pulley sheave at which the plural engaged portions are arranged may be the driving-side fixed pulley sheave or the driven-side fixed pulley sheave.

The present invention also describes a pulley sheave supported by one of a driving shaft or a driven shaft in a relatively non-rotatable manner around an axis line with respect thereto and in an axially immovable manner along the axis line, the pulley sheave cooperating with another pulley sheave to form a pulley in which an endless element engages, another pulley sheave being supported by the one shaft in a relatively non-rotatable manner around the axis line with respect thereto and in an axially movable manner only within a predetermined distance, wherein the pulley sheave includes a tubular portion supported by the one shaft in a relatively non-rotatable manner around the axis line with respect thereto and in an axially immovable manner along the axis line, and a main body portion extending radially outward from the tubular portion, and wherein the main body portion includes a conical friction surface and plural engaged portions, the friction surface being inclined in such a manner as to be gradually positioned from one side to the other side of the tubular portion in the axis line direction as it goes from an inner side to an outer side in a radial direction, the engaged portions being arranged over the whole outer circumferential edges of the main body portion and each engaged portion being formed into a concave shape opening radially outward or a convex shape projecting radially outward.

The pulley sheave can function as one component of a belt type continuously variable transmission as well as one component of a brake structure. Accordingly, it is possible to provide the brake structure in a traveling system power transmission path including the belt type continuously variable transmission while preventing the power transmission path from increasing in size and cost.

### BRIEF DESCRIPTION OF THE DRAWINGS

The above, and other objects, features and advantages of the present invention will become apparent from the detailed description thereof in conjunction with the accompanying drawings therein.
Fig. 1 is a side view of a working vehicle to which a CVT according to a first embodiment of the present invention is applied.
Fig. 2 is a vertical cross sectional view of the CVT according to the first embodiment.
Fig. 3 is a cross sectional view taken along the line III-III in Fig. 1.
Fig. 4 is a cross sectional view taken along the line IV-IV in Fig. 1.
Fig. 5 is a vertical cross sectional rear view of a first modification of a forward-rearward movement switching mechanism provided in the working vehicle.
Fig. 6 is a vertical cross sectional rear view of a second modification of the forward-rearward movement switching mechanism.
Figs. 7A and 7B are cross sectional views of a fixed pulley sheave and a movable pulley sheave, respectively.
Fig. 8 is a vertical cross sectional view of a pulley forming body.
Fig. 9 is a vertical cross sectional view of a modification of the movable pulley sheave.
Fig. 10 is a side view of a working vehicle to which a CVT according to a second embodiment of the present invention is applied.
Fig. 11 is a vertical cross sectional view of the CVT according to the second embodiment.
Fig. 12 is a cross sectional view taken along the line XII-XII in Fig. 11.
Figs. 13A and 13B are a plan view and a partially vertical cross sectional side view of a driven-side fixed pulley sheave of the CVT according to the second embodiment, respectively.
Fig. 14A is a partially vertical cross sectional view of a pulley forming body that is a common base structure for a driving-side fixed pulley sheave, a driving-side movable pulley sheave, a driven-side fixed pulley sheave and a driven-side movable pulley sheave of the CVT according to the second embodiment.
Fig. 14B is a partially vertical cross sectional side view of the driving-side fixed pulley sheave and the driven-side fixed pulley sheave.
Fig. 14C is a partially vertical cross sectional side view of the driving-side movable pulley sheave and the driven-side movable pulley sheave.
Fig. 14D is a partially cross sectional side view of a modification of the driven-side movable pulley sheave.
Fig. 15 is a partially cross sectional plan view of a working vehicle to which a CVT according to a third embodiment of the present invention is applied.
Fig. 16 is a cross sectional view taken along the line XVI-XVI in Fig. 15.

### DETAILED DESCRIPTION OFTHE PREFERRED EMBODIMENTS

### First embodiment

Hereinafter, a preferred embodiment of a belt type continuously variable transmission (CVT) according to the present invention will be explained, with reference to the attached drawings.

The CVT 100 according to the present embodiment is inserted in a traveling system power transmission path in a working vehicle 1.

An overall configuration of the working vehicle 1 to which the CVT 100 according to the present embodiment is applied will be first explained.

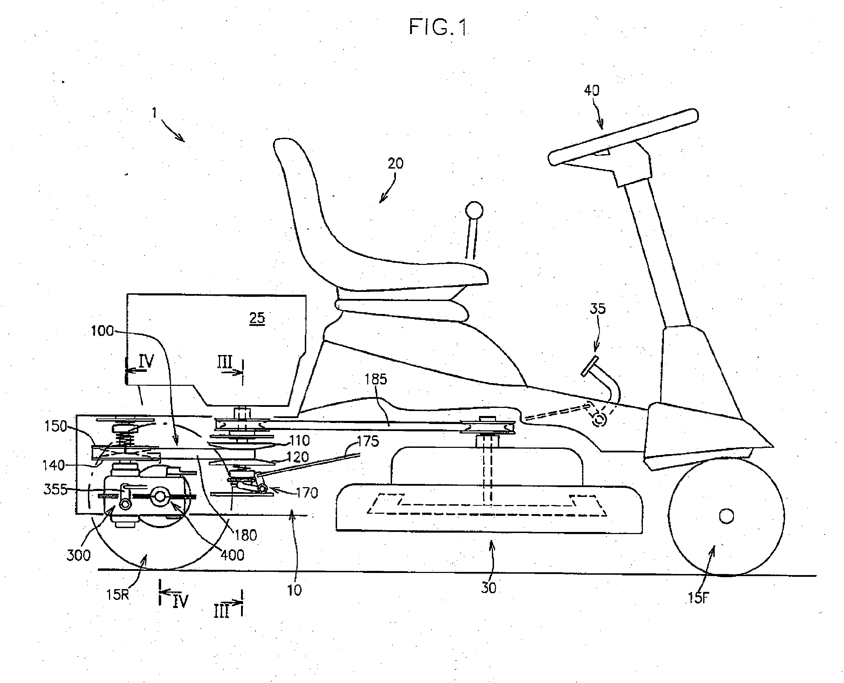

Fig. 1 illustrates a side view of the working vehicle 1A.

As shown in Fig. 1, the working vehicle is embodied as a riding lawn mower.

More specifically, the working vehicle 1 includes a vehicle frame 10, front wheels 15F and rear wheels 15R supported by the vehicle frame 10, a driver's seat 20 supported by the vehicle frame 10, a driving power source 25 supported by the vehicle frame 10 and having an output shaft that extends vertically, the CVT 100 interposed within the traveling system power transmission path extending from the driving power source 25 to wheels of the front wheels 15F and the rear wheels 15R that function as driving wheels, a mower device 30 supported by the vehicle frame 10 while being operatively driven by rotational power from the driving power source 25, a speed-change operating member 35 disposed in the vicinity of the driver's seat 20, and a steering member 40 disposed in the vicinity of the driver's seat 20.

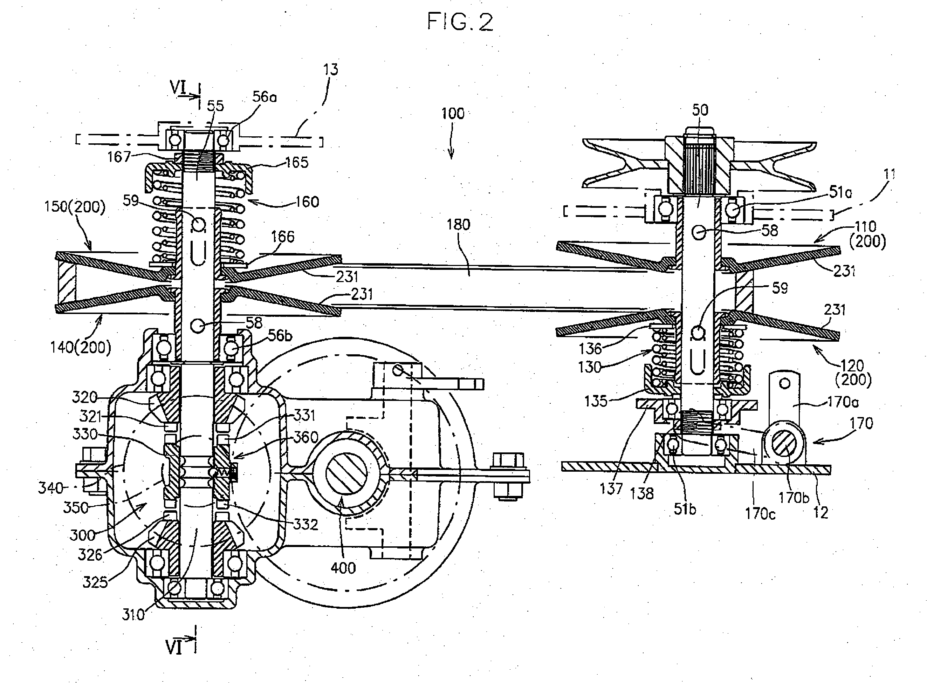

Fig. 2 illustrates a vertical cross sectional view of the CVT 100.

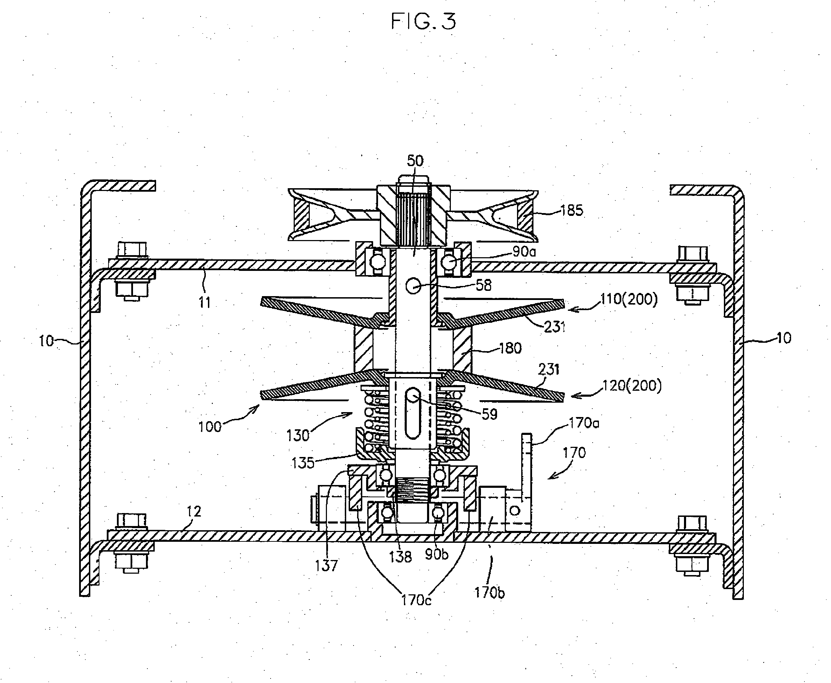

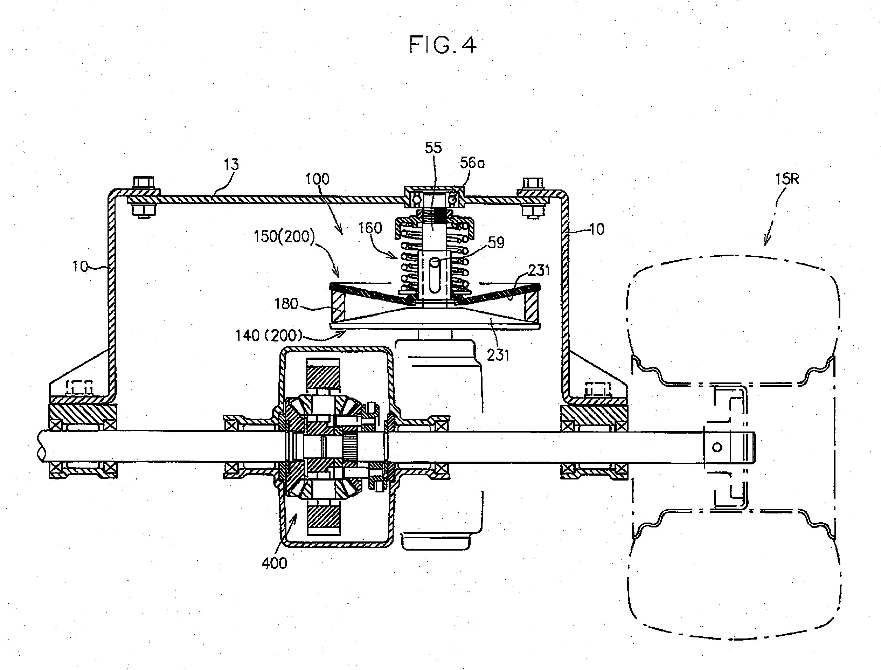

Figs. 3 and 4 illustrate cross sectional views taken along the line III-III and the line IV-IV in Fig. 1, respectively,

As shown in Figs. 2 and 4, the working vehicle 1 further includes a forward-rearward movement switching mechanism 300 and a differential gear mechanism 400, which are interposed in the traveling system power transmission path.

In the present embodiment, the rear wheels 15 R function as the driving wheels.

Accordingly, the CVT 100, the forward-rearward switching mechanism 300 and the differential gear mechanism 400 are interposed in the power transmission path extending from the driving power source 25 to the rear wheels 15 R.

In the present embodiment, the front wheels 15F function as steering wheels that are steered in accordance with a manual operation on the steering member 40.

Further, in the present embodiment, a rotational power is transmitted from the driving power source 25 to the mower device 30 by way of an endless element 185 such as V belt.

The CVT 100 transmits rotational power from a driving shaft 50 to a driven shaft 55, both the shafts being arranged vertically in the traveling system power transmission path, and continuously changes a speed of the rotational power that is transmitted to the driven shaft 55.

More specifically, as shown in Figs. 2 and 3, the CVT 10 includes a driving-side fixed pulley half or pulley sheave 110, a driving-side movable pulley half or pulley sheave 120, a driving-side biasing member 130, a driven-side fixed pulley half or pulley sheave 140, a driven-side movable pulley half or pulley sheave 150, a driven-side biasing member 160, a speed-change operating mechanism 170 and an endless element 180 such as V belt.

The driving-side fixed pulley sheave 110 is supported on the driving shaft 50 in a relatively non-rotatable manner with respect thereto and in an axially immovable manner.

The driving-side movable pulley sheave 120 is supported on the driving shaft 50 in a relatively non-rotatable manner with respect thereto and in an axially movable manner only within a predetermined distance while facing the driving-side fixed pulley sheave 110.

The driving-side biasing member 130 presses the driving-side movable pulley sheave 120 toward the driving-side fixed pulley sheave 110.

The driven-side fixed pulley sheave 140 is supported on the driven shaft 55 in a relatively non-rotatable manner with respect thereto and in an axially immovable manner.

The driven-side movable pulley sheave 150 is supported on the driven shaft 55 in a relatively non-rotatable manner with respect thereto and in an axially movable manner only within a predetermined distance while facing the driven-side fixed pulley sheave 140.

The driven-side biasing member 160 presses the driven-side movable pulley sheave 150 toward the driven-side fixed pulley sheave 140, and has a pressing force or a biasing force larger than the driving-side biasing member 130.

The speed-change operating mechanism 170 increases the pressing force of the driven-side biasing member 130 in response to an operating force applied from an outside.

The endless element 180 runs between a driving pulley and a driven pulley, the driving pulley including the driving-side fixed pulley sheave 110 and the driving-side movable pulley sheave 120, and the driven pulley including the driven-side fixed pulley sheave 140 and the driven-side movable pulley sheave 150.

Bearing members 51a and 51b supporting upper and lower sides of the driving shaft 50 are supported by a cross members 11 and 12 that are fixed to the vehicle frame 10. A bearing member 56a supporting an upper side of the driven shaft 55 is supported by a cross member 13 that is fixed to the vehicle frame 10.

The speed-change operating mechanism 170 includes an operating arm portion 170a, a pivotal shaft portion 170b and a fork portion 170c, wherein the pivotal shaft portion 170b is supported by the cross member 102 so as to be along a substantially horizontal direction.

The CVT operates as follows.

Since the driven-side biasing member 160 has the pressing force larger than the driving-side biasing member 130, a distance between the driven-side movable pulley sheave 150 and the driven-side fixed pulley sheave 140 becomes shortest when the speed-change operating mechanism 170 is at an initial state in which no operating force from an outside is applied thereto, so that a distance between the driving-side movable pulley sheave 120 and the driving-side fixed pulley sheave 110 becomes longest.

At the initial state of the speed-change operating mechanism 170, the CVT 100 is in a minimum speed state (see Fig. 2) in which an effective diameter of the driving pulley formed by the driving-side fixed pulley sheave 110 and the driving-side movable pulley sheave 120 becomes smallest while an effective diameter of the driven pulley formed by the driven-side fixed pulley sheave 140 and the driven-side movable pulley sheave 150 becomes largest. The effective diameter is a distance from an axial center of the corresponding shaft to a position on which the endless element 180 runs in the corresponding pulley sheave.

If an operating force is applied from an outside to the speed-change operating mechanism 170 at the initial state, the speed-change operating mechanism 170 increases the pressing force of the driving-side biasing member 130 in accordance with the amount of the operating force. This causes the driving-side movable pulley sheave 120 to move towards the driving-side fixed pulley sheave 110 along the axial direction of the driving shaft 50, and the driven-side movable pulley sheave 150 accordingly moves apart from the driven-side fixed pulley sheave 140 along the axial direction of the driven shaft 55.

This movement causes the effective diameter of the driving pulley to become larger and accordingly causes the effective diameter of the driven pulley to become smaller so that the rotational speed of the driven shaft 55 is increased.

A portion of the driving shaft 50 in which the driving-side movable pulley sheave 120 moves and a portion of the driven shaft 55 in which the driven-side movable pulley sheave 150 moves are preferably coated with low friction material.

In the present embodiment, as shown in Fig. 2, the driving shaft 50 is provided with a driving-side end cap 135 on a rear side (a side opposite to the driving-side fixed pulley sheave 110) of the driving-side movable pulley sheave 120. A coil spring forming the driving-side biasing member 130 has a first end engaged with the rear side of the driving-side movable pulley sheave 120 and a second end engaged with the driving-side end cap 135.

In the present embodiment, the first end of the driving-side biasing member 130 is engaged with the rear side of the driving-side movable pulley sheave 120 via a contacting plate 136 (see Fig. 2) inserted around the driving shaft 50 in an axially movable manner.

Similarly, the driven shaft 55 is provided with a driven-side end cap 165 on a rear side (a side opposite to the driven-side fixed pulley sheave 140) of the driven-side movable pulley sheave 150. A coil spring forming the driven-side biasing member 160 has a first end engaged with the rear side of the driven-side movable pulley sheave 150 and a second end engaged with the driven-side end cap 165.

The driven-side end cap 165 receives the pressing force from the driven-side biasing member 160 through an adjusting threaded mechanism 167 (see Fig. 2).

In the present embodiment, the first end of the driven-side biasing member 160 is engaged with the rear side of the driven-side movable pulley sheave 150 via a contacting plate 166 (see Fig. 2) inserted around the driven shaft 55 in an axially movable manner.

The driving-side end cap 135 is supported by the driving shaft 50 while being operatively connected to the speed-change operating mechanism 170 in such a manner that the cap 135 is positioned at an initial position in the axial direction when the speed-change operating mechanism 170 applies no pressing force thereto, and moves to one side in the axial direction that is towards the driving-side fixed pulley sheave 110 as the pressing force by the speed-change operating mechanism 170 increases.

As shown in Fig. 2, the initial position is defined by an adjusting threaded mechanism 138 that is engaged with the driving-side end cap 135 through a pressure plate 137.

The fork portion 170c of the speed-change operating mechanism 170 has a free end engaged with a rear side of the pressure plate 137, so that the operating force that is transmitted from the speed-change operating mechanism 170 through the pressure plate 137 to the driving-side end cap 135 causes the driving-side end cap 135 to move to the one side (the upper side in Fig. 2) in the axial direction against the pressing force.

The driven-side end cap 165 is supported by the driven shaft 55 in such a manner as to be immovable from a predetermined position in the axial direction to a side opposite to one side in the axial direction that is towards the driven-side fixed pulley sheave 140.

The predetermined position is defined by the adjusting threaded mechanism 167 that comes into contact with the driven-side end cap 165. The adjusting threaded mechanism 138 and 167 define a maximum reduction position of the CVT shown in Fig. 2.

The speed-change operating mechanism 170 may take various configurations as long as it increases the pressing force of the driving-side biasing member 130 in accordance with a manual operation on the speed-change operating member 35.

In the present embodiment, as shown in Fig. 1, the speed-change operating mechanism 170 is operatively connected to the speed-change operating member 35 through a mechanical link 175.

Alternatively, the working vehicle may be provided with a sensor (not shown) that detects an operating amount of the speed-change operating member 35, an actuator (not shown) that actuates the speed-change operating mechanism 170 and a control device (not shown). In this case, the control device operates the actuator based on a signal from the sensor.

The forward-rearward movement switching mechanism 300 changes a driving direction of the driving wheels in accordance with an operation from an outside.

In the present embodiment, as shown in Fig. 2, the forward-rearward movement switching mechanism 300 is arranged between the CVT 100 and the differential gear mechanism 400 with respect to a power transmission direction.

The forward-rearward movement switching mechanism 300 selectively realizes a forward movement state, a rearward movement or a neutral state. The forward movement state is a power transmission state in which the rotational power for the forward movement is transmitted from the driven shaft 55 to the differential gear mechanism 400. The rearward movement state is a power transmission state in which the rotational power for the rearward movement is transmitted from the driven shaft 55 the differential gear mechanism 400. The neutral state is a state in which the power transmission from the driven shaft 55 to the differential gear mechanism 400 is interrupted.

More specifically, as shown in Fig. 2, the forward-rearward movement switching mechanism 300 includes a forward-rearward movement input shaft 310 operatively connected to the driven shaft 55, a forward-rearward movement output shaft 350 operatively connected to the differential gear mechanism 400, a forward movement bevel gear 320, a rearward movement bevel gear 325, a switching slider 330 and a driven-side bevel gear.

The forward movement bevel gear 320 and the rearward movement bevel gear 325 are supported by the forward-rearward movement input shaft 310 in a relatively rotatable manner around an axis line with respect thereto while being apart from each other.

The switching slider 330 is supported by the forward-rearward movement input shaft 310 between the forward movement bevel gear 320 and the rearward movement bevel gear 325. The switching slider 330 is relatively non-rotatable around the axis line with respect to the shaft 310 and axially movable along the axis line, and moved along the axis line in accordance with an operation from an outside.

The driven-side bevel gear 340 is supported by the forward-rearward movement output shaft 350 in a relatively non-rotatable manner with respect thereto while being engaged with the forward movement bevel gear 320 and the rearward movement bevel gear 325.

As shown in Fig. 2, in the present embodiment, the forward-rearward movement input shaft 310 is integrally formed with the driven shaft 55. That is, a single shaft functions as both the driven shaft 55 and the forward-rearward movement input shaft 310.

It is, of course, possible that the two shafts are formed separately and connected to each other in a relatively non-rotatable manner around an axis line.

The forward movement bevel gear 320 and the rearward movement bevel gear 325 have engagement protrusions 321 and 326 at respective surfaces facing the switching slider 330.

The switching slider 330 has a forward movement engagement protrusion 331 capable of engaging with the engagement protrusion 321 of the forward movement bevel gear 320, and a rearward movement engagement protrusion 332 capable of engaging with the engagement protrusion 326 of the rearward movement bevel gear 325.

The switching slider 330 selectively takes a neutral position (see Fig. 2), a forward position or a rearward position in accordance with an operation from an outside. When the switching slider 330 is positioned at the neutral position, the forward movement engagement protrusion 331 does not engage with the engagement protrusion 321 of the forward movement bevel gear 320 and the rearward movement engagement protrusion 332 also does not engage with the engagement protrusion 326 of the rearward movement bevel gear 325. When the switching slider 330 is moved to one side in the axis line from the neutral position to be positioned at the forward position, the forward movement engagement protrusion 331 engages with the engagement protrusion 321 of the forward movement bevel gear 320. When the switching slider 330 is moved to the other side in the axis line from the neutral position to be positioned at the rearward position, the rearward movement engagement protrusion 332 engages with the engagement protrusion 326 of the rearward movement bevel gear 325.

In the present embodiment, the switching slider 330 receives the operating force from the outside through an operating arm 335 (see Fig. 1).

As shown in Fig. 2, the forward-rearward movement switching mechanism 300 is preferably provided with a detent mechanism 360. The detent mechanism 360 prevents the switching slider 330 from unintentionally moving along the axis line while allowing the switching slider 360 to move along the axis line among the forward position, the neutral position and the rearward position when an operating force larger than a predetermined amount is applied to the switching slider 330.

It is, of course, possible to adopt another forward-rearward movement switching mechanism in place of the forward-rearward movement switching mechanism 300.

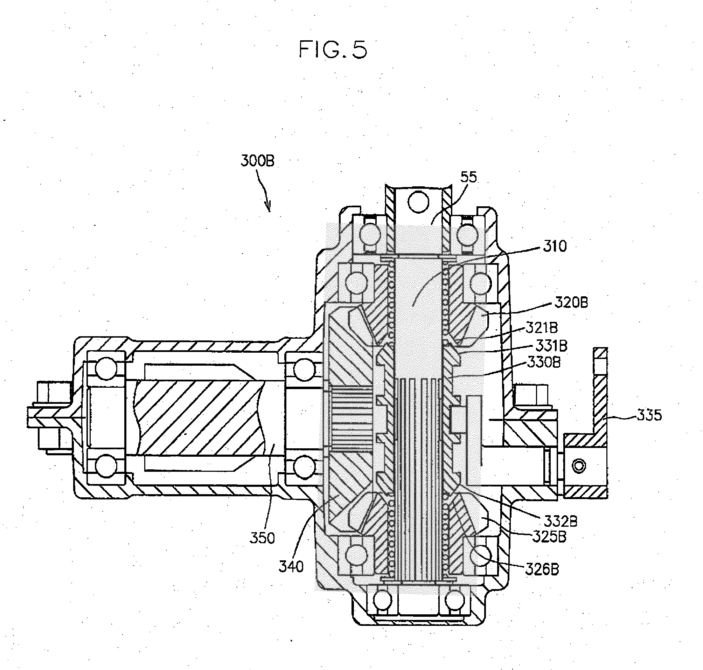

Fig. 5 illustrates a vertical cross sectional rear view of a forward-rearward movement switching mechanism 300B according to a first modification.

In the drawing, the same reference numerals are denoted for the same components as those of the forward-rearward movement switching mechanism 300 to omit the detailed explanation thereof.

As shown in Fig. 5, the forward-rearward movement switching mechanism 300B includes the forward-rearward movement input shaft 310, the forward-rearward movement output shaft 350, a forward movement bevel gear 320B, a rearward movement bevel gear 325B, a switching slider 330B and the driven-side bevel gear 340.

The forward movement bevel gear 320B and the rearward movement bevel gear 325B are supported by the forward-rearward movement input shaft 310 in a relatively rotatable manner around the axis line with respect thereto while being apart from each other.

The switching slider 330B is supported by the forward-rearward movement input shaft 310 between the forward movement bevel gear 320B and the rearward movement bevel gear 325B. The switching slider 330B is relatively non-rotatable around the axis line with respect to the shaft 310 and axially movable along the axis line, and moved along the axis line in accordance with an operation from an outside.

In the forward-rearward movement switching mechanism 300, the forward movement engagement protrusion 331 or the rearward movement engagement protrusion 332 engages with the engagement protrusion 321 of the forward movement bevel gear 320 or the engagement protrusion 326 of the rearward movement bevel gear 325, so that the rotational power is transmitted from the forward-rearward movement input shaft 310 to the corresponding bevel gear 320 or 325 through the switching slider 330, as described earlier.

Alternatively, in the forward-rearward movement switching mechanism 300B according to the first modification, the switching slider 330B transmits the rotational power from the forward-rearward movement input shaft 310 to the corresponding bevel gear 320B or 325B by a frictional engagement.

More specifically, the forward movement bevel gear 320B and the rearward movement bevel gear 325B have concave frictional engagement surfaces 321B and 326B at respective surfaces facing the switching slider 330B.

The switching slider 330B has a convex frictional engagement surface for forward movement 331B at a surface facing the forward movement bevel gear 320B, and a convex frictional engagement surface for rearward movement 332B at a surface facing the rearward movement bevel gear 325B.

The switching slider 330B selectively takes a neutral position (see Fig. 5), a forward position or a rearward position in accordance with an operation from an outside. When the switching slider 330B is positioned at the neutral position, the frictional engagement surface for forward movement 331B does not engage with the frictional engagement surface 321B of the forward movement bevel gear 320B and the frictional engagement surface for rearward movement 332B also does not engage with the frictional engagement surface 326B of the rearward movement bevel gear 3258. When the switching slider 330B is moved to one side in the axis line from the neutral position to be positioned at the forward position, the frictional engagement surface for forward movement 331B engages with the frictional engagement surface 321B of the forward movement bevel gear 320B. When the switching slider 330B is moved to the other side in the axis line from the neutral position to be positioned at the rearward position, the frictional engagement surface for rearward movement 332B engages with the frictional engagement surface 326B of the rearward movement bevel gear 325B.

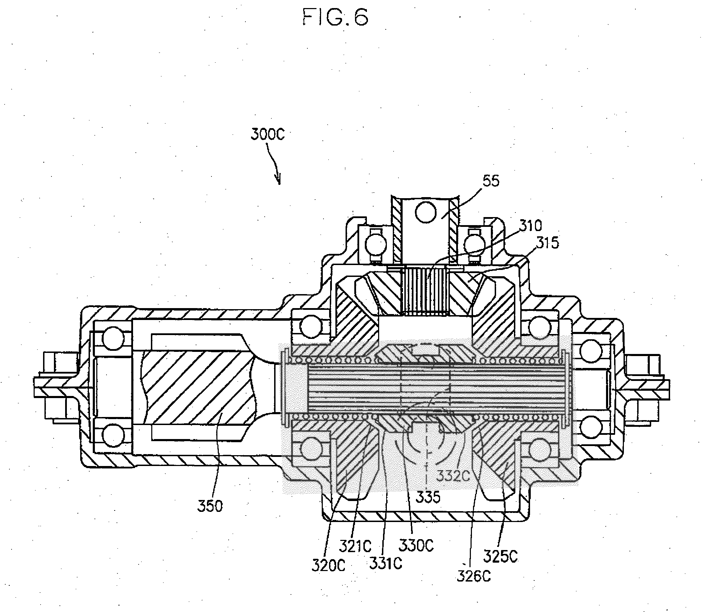

Fig. 6 illustrates a vertical cross sectional rear view of a forward-rearward movement switching mechanism 300C according to a second modification.

In the drawing, the same reference numerals are denoted for the same components as those of the forward-rearward movement switching mechanism 300 or the first modification 300B to omit the detailed explanation thereof

In the forward-rearward movement switching mechanism 300 and the first modification 300B, the switching slider 330, 330B is supported by the forward-rearward movement input shaft 310.

On the other hand, in the forward-rearward movement switching mechanism 300C according to the second modification, the switching slider 330C is supported by the forward-rearward movement output shaft 350.

More specifically, as shown in Fig. 2, the forward-rearward movement switching mechanism 300C according to the second modification includes the forward-rearward movement input shaft 310, the forward-rearward movement output shaft 350, a driving-side bevel gear 315 supported by the forward-rearward movement input shaft 310 in a relatively non-rotatable manner around the axis line with respect thereto, a forward movement bevel gear 320C, a rearward movement bevel gear 325C, and a switching slider 330C.

The forward movement bevel gear 320C and the rearward movement bevel gear 325C are supported by the forward-rearward movement output shaft 350 in a relatively rotatable manner around the axis line with respect thereto while being engaged with the driving-side bevel gear 315 and being apart from each other.

The switching slider 330C is supported by the forward-rearward movement output shaft 350 between the forward movement bevel gear 320C and the rearward movement bevel gear 325C. The switching slider 330C is relatively non-rotatable around the axis line with respect to the shaft 350 and axially movable along the axis line, and moved along the axis line in accordance with an operation from an outside.

The forward movement bevel gear 320C and the rearward movement bevel gear 325C have concave frictional engagement surfaces 321C and 326C at respective surfaces facing the switching slider 330C.

The switching slider 330C has a convex frictional engagement surface for forward movement 331C at a surface facing the forward movement bevel gear 320C, and a convex frictional engagement surface for rearward movement 332C at a surface facing the rearward movement bevel gear 325C.

The switching slider 330C selectively takes a neutral position (see Fig. 6), a forward position or a rearward position in accordance with an operation from an outside. When the switching slider 330C is positioned at the neutral position, the frictional engagement surface for forward movement 331C does not engage with the frictional engagement surface 321C of the forward movement bevel gear 320C and the frictional engagement surface for rearward movement 332C also does not engage with the frictional engagement surface 326C of the rearward movement bevel gear 325C. When the switching slider 330C is moved to one side in the axis line from the neutral position to be positioned at the forward position, the frictional engagement surface for forward movement 331C engages with the frictional engagement surface 321C of the forward movement bevel gear 320C. When the switching slider 330C is moved to the other side in the axis line from the neutral position to be positioned at the rearward position, the frictional engagement surface for rearward movement 332C engages with the frictional engagement surface 326C of the rearward movement bevel gear 325C.

It is possible to modify the second modification 300C in such a manner that the switching slider 330C receives the rotational power from the forward movement bevel gear 320C or the rearward movement bevel gear 325C through an engagement using an engagement protrusion in place of the frictional engagement.

The detailed configurations of the driving-side fixed pulley sheave 110, the driving-side movable pulley sheave 120, the driven-side fixed pulley sheave 140 and the driven-side movable pulley sheave 150 will now be explained.

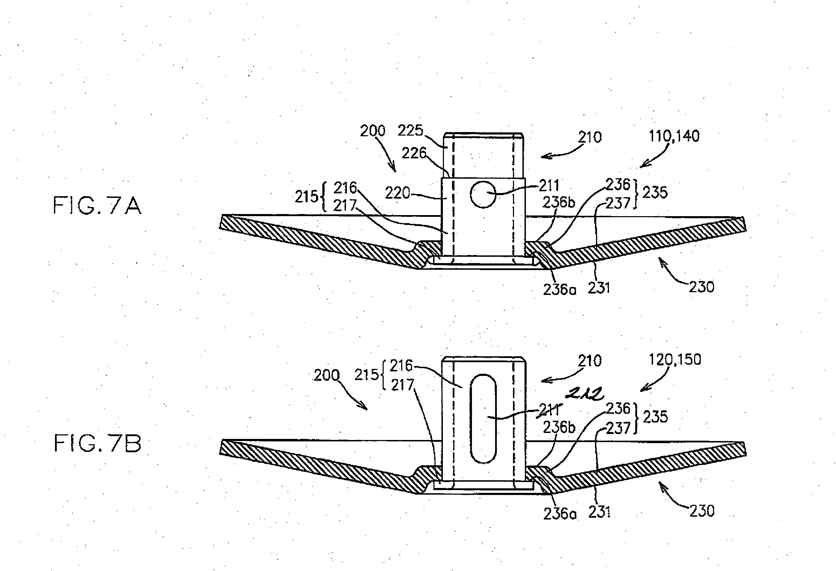

Figs. 7A and 7B illustrate cross sectional views of the fixed pulley sheave 110, 14o and the movable pulley sheave 120, 150, respectively.

As shown in Figs. 7A and 7B, the pulley sheaves 110, 120, 140, 150 are common one another in that each of them includes a pulley forming body 200 having a tubular portion 210 and a main body portion 230.

The tubular portion 210 is inserted around the corresponding shaft in an axially movable manner.

The main body portion 230 extends radially outward from one side of the tubular portion 210 in an axis line direction, and have a conical friction surface 231 inclined in such a manner as to be positioned closer to the other side of the tubular portion in the axis line direction as it goes from an inner side to an outer side in a radial direction.

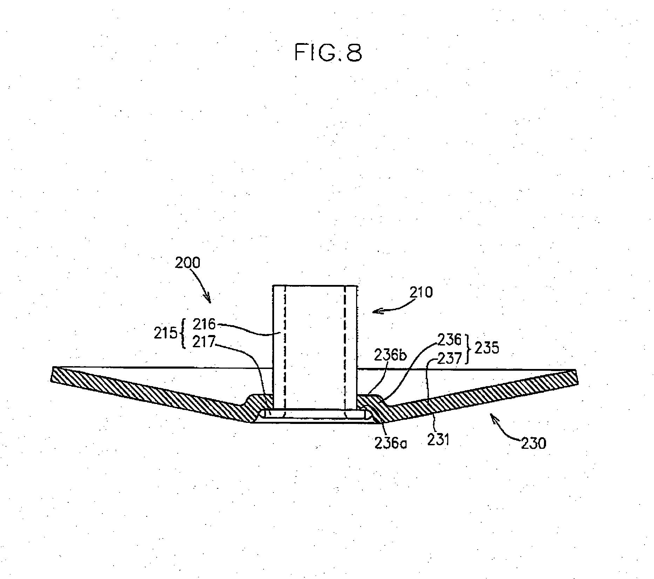

Fig. 8 illustrates a vertical cross sectional view of the pulley forming body 200.

As shown in Figs. 7A, each of the pulley forming bodies 200 that forms the driving-side and driven-side fixed pulley sheaves 110, 140 is formed with a fixing hole 211 at the tubular portion 210, in comparison with the pulley forming body 200 shown in Fig. 8.

As shown in Figs. 2 and 3, the fixing hole 211 is formed so that a pin 58 provided at the corresponding shaft 50 (55) is inserted therein so that each of the driving-side and driven-side fixed pulley sheaves 110, 140 is relatively non-rotatable around the axis line with respect to the corresponding shaft 50 (55) and immovable along the axis line.

As shown in Figs. 7B, each of the pulley forming bodies 200 that forms the driving-side and driven-side movable pulley sheaves 120, 150 is formed with a sliding slot 212 at the tubular portion 210, in comparison with the pulley forming body 200 shown in Fig. 8. The sliding slot 212 is formed so that a pin 59 provided at the corresponding shaft 50 (55) is inserted therein and allow the tubular portion 210 to be moved in the axis line of the corresponding shaft 50 (55) only within a predetermined distance.

As shown in Figs. 2 and 3, the engagement of the pin 59 into the sliding slot 212 causes the driving-side and driven-side movable pulley sheave 120, 150 to be relatively non-rotatable around the axis line with respect to the corresponding shaft 50 (55) but axially movable along the axis line only within the distance corresponding to a length of the sliding slot 212 in the axis line direction.

As described above, the driving-side fixed pulley sheave 110 and the driven-side fixed pulley sheave 140 are obtained by forming the fixing hole 211 in the pulley forming body 200, while the driving-side movable pulley sheave 120 and the driven-side movable pulley sheave 150 are obtained by forming the sliding slot 212 in the pulley forming body 200.

That is, in the CVT 100 according to the present embodiment, all of the two pulley sheaves 110, 120 forming the driving pulley and the two pulley sheaves 140, 150 forming the driven pulley are common one another in that they have the pulley forming bodies as base materials, thereby realizing cost reduction as much as possible by common use of the pulley forming body.

More specifically, in a conventional CVT, a driving-side fixed pulley sheave, a driving-side movable pulley sheave, a driven-side fixed pulley sheave and a driven-side movable pulley sheave incudes tubular portions and main body portions extending radially outward from the tubular portions.

In the conventional CVT, the tubular portion of the driving-side fixed pulley sheave is inserted around a corresponding driving shaft, while the tubular portion of the driving-side movable pulley sheave is inserted around the tubular portion of the driving-side fixed pulley sheave. Similarly, the tubular portion of the driven-side fixed pulley sheave is inserted around a corresponding driven shaft, while the tubular portion of the driven-side movable pulley sheave is inserted around the tubular portion of the driven-side fixed pulley sheave.

In the thus configured conventional CVT, the tubular portion of the fixed pulley sheave and the tubular portion of the movable pulley sheave are different from each other with respect to dimensions of inner and outer diameters.

Further, the difference between the outer diameters of the tubular portion of the fixed pulley sheave and the tubular portion of the movable pulley sheave causes a difference between the main body portion fixed to the tubular portion of the fixed pulley sheave and the main body portion fixed to the tubular portion of the movable pulley sheave with respect to a dimension of an inner diameter.

Accordingly, the conventional CVT needs an exclusive tubular portion and an exclusive main body portion for forming the fixed pulley sheave, and another exclusive tubular portion and another exclusive main body portion for forming the movable pulley sheave, resulting in increase of manufacturing cost.

On the other hand, in the present embodiment, the driving-side fixed pulley sheave 110, the driving-side movable pulley sheave 120, the driven-side fixed pulley sheave 140 and the driven-side movable pulley sheave 150 are made from the common materials, i.e. the pulley forming bodies 200 including the tubular portions 210 and the main body portions 230. Accordingly, the present embodiment can realize a cost reduction as much as possible by common application of the pulley forming body.

In the present embodiment, as shown in Figs. 2, 3 and 7A, the tubular portion 210 of the pulley forming body 200 that forms the driving-side fixed pulley sheave 110 and the driven-side fixed pulley sheave 140 includes a large diameter portion that is positioned on one side in an axis line direction and has a large diameter, and a small diameter portion 225 that extends towards the other side in the axis line direction from the large diameter portion 220 through a step 226 and has a diameter smaller than that of the large diameter portion 220.

The configuration can utilize the step 226 as an engagement portion with which an inner ring of the bearing member 51a (see Fig. 2) engages, so that the fixed pulley sheave 110 (140) can be effectively prevented from moving to the other side in the axis line direction while being relatively rotatable around the axis line with respect to the corresponding shaft 50 (55).

The small diameter portion 225 can be easily formed by, for example, cutting a predetermined area out of an outer surface of the tubular portion 210 of the pulley forming body 200

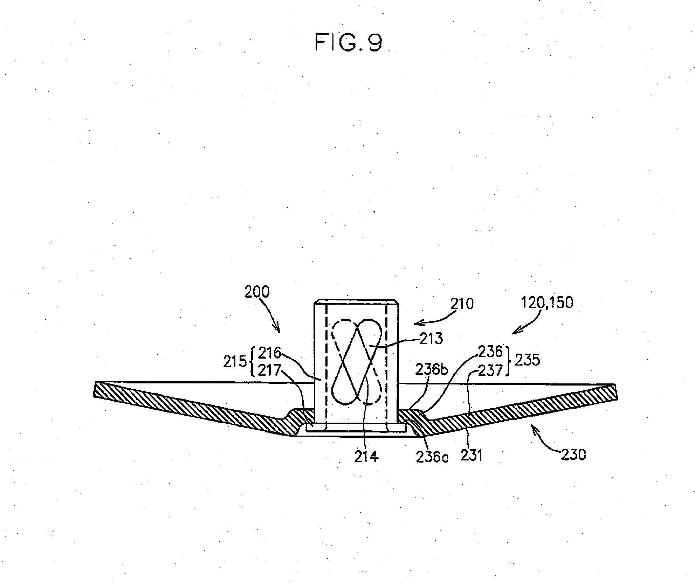

As shown in Fig. 9, the tubular portion 210 of the pulley forming body 200 that forms the movable pulley sheave 150 may be preferably formed with a sliding slot 213 in place of the sliding slot 212. The sliding slot 213 includes a cam region 214 that allows the tubular portion 210 to move from the one side to the other side in the axis line direction of the corresponding driven shaft 55 and also causes the tubular portion 210 to rotate from one side to the other side around the axis line of the corresponding driven shaft 55 in response to the movement of the tubular portion 210 from the one side to the other side in the axis line direction.

The configuration can realize an automatic speed change in response to a travelling load or resistance applied to the driving wheels (the rear wheels 15R in the present embodiment) that are operatively connected to the driven shaft 55, in addition to a speed change based on a manual operation through the speed change operating mechanism 170.

In the present embodiment, the main body portion 230 and the tubular portion 210 of the pulley forming body 200 are formed separately, and are fixed to each other by welding or the like.

More specifically, as shown in Figs. 7A, 7B, 8 and 9, the main body portion 230 is made from a main body portion forming member 235, while the tubular portion 210 is made from a tubular portion forming member 215 that is separate from the main body portion forming member 235.

The main body portion forming member 235 includes a radially-inward portion 236 that is formed with a center hole having a predetermined diameter, and a radially-outward portion 237 that extends radially outward from the radially-inward portion 236 and has the friction surface 231.

The tubular portion forming member 215 includes an inserted portion 216 that is inserted into the center hole while being come into contact with an inner circumference surface of the center hole, and a flange portion 217 that extends radially outward from one side of the inserted portion 216 in the axis line direction.

In the configuration where the tubular portion 210 includes the large diameter portion 220 and the small diameter portion 225, the large diameter portion 220 functions as the inserted portion 216 (see Fig. 7A).

The radially-inward portion 236 includes an outer surface 236a and an inner surface 236b that faces to one direction same as and the other direction opposite to the friction surface 231 with respect to the axis line direction.

The outer surface 236a functions as a flange portion-engagement surface that engages with the flange portion 217.

That is, the tubular portion forming member 215 is fixed to the main body portion forming member 235 by welding or the like in a state where the flange portion 217 is come into contact with the outer surface 236a and the inserted portion 216 is inserted into the center hole.

The inner surface 236b functions as a stopper that directly or indirectly engages with a first end of the corresponding biasing member 130, 160

In the present embodiment, the inner surface 236 engages with the first end of the corresponding biasing member 130, 160 through the contacting plate 136, 166.

The outer surface 236a and the inner surface 236b are preferably formed to be substantially orthogonal to the axis line of the tubular portion 210.

The configuration can realize a stable engagement between the flange portion 217 and the outer surface 236a, and a stable engagement between the biasing member 130, 160 and the inner surface 236b.

In a preferable configuration, as shown in Figs, 7A, 7B or the like, the radially-inward portion 236 is concaved from a radially inner end of the radially-outward portion 237, and the flange portion 217 is disposed within a concave portion defined by the radially-inward portion 236

.The preferable configuration can stably fix the tubular portion 210 and the main body portion 230 to each other while preventing the tubular portion from protruding axially outward from the friction surface 231

### Second embodiment

Hereinafter, another embodiment of the CVT according to the present invention will be explained, with reference to the attached drawings.

A CVT 100B according to the present embodiment is mainly different from the CVT 100 according to the first embodiment in that the CVT 100B includes a brake structure 250 capable of selectively applying a braking force to a travelling system power transmission path in which the CVT 100B is arranged.

An overall configuration of one example 1B of a working vehicle that includes the CVT 100B will be first explained.

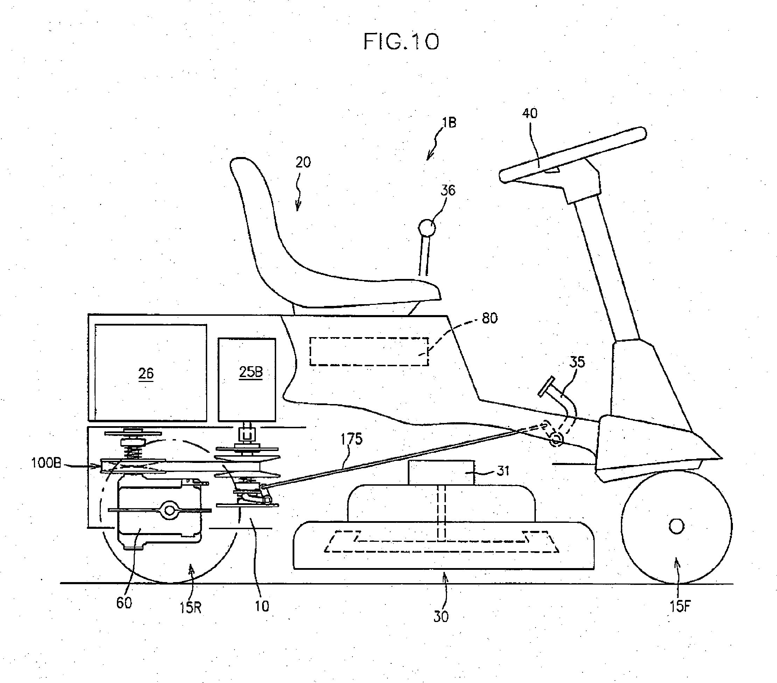

Fig. 10 illustrates a side view of the working vehicle 1B.

In Fig. 10 and following drawings, the same reference numerals are denoted for the same components as those of the first embodiment to omit the detailed explanation thereof.

As shown in Fig. 10, the working vehicle 1B is embodied as a riding lawn mower.

More specifically, the working vehicle 1B includes the vehicle frame 10, the front wheels 15F, the rear wheels 15R, the driver's seat 20, a driving power source 25B supported by the vehicle frame 10 and having an output shaft that extends vertically, the CVT 100B, the mower device 30, the speed-change operating member 35 and the steering member 40.

In the present embodiment, the driving power source 25B is embodied as an electric motor capable of switching a rotational direction of an output to a forward direction or a reverse direction. The working vehicle 1B is further provided with a battery 26 that functions as a power source of the electric motor 25B.

The working vehicle 1B is further provided with a control device 80. The control device 80 controls the electric motor 25B so as to output a constant rotational power in one direction of the forward and reverse directions that is defined by a manual operation on a forward-rearward movement switching operating member 36 arranged in the vicinity of the driver's seat 20.

In the present embodiment, the mower device 30 is operatively driven by an electric motor for mower device 31 that is separate from the electric motor 25B.

The CVT 100B will be now explained.

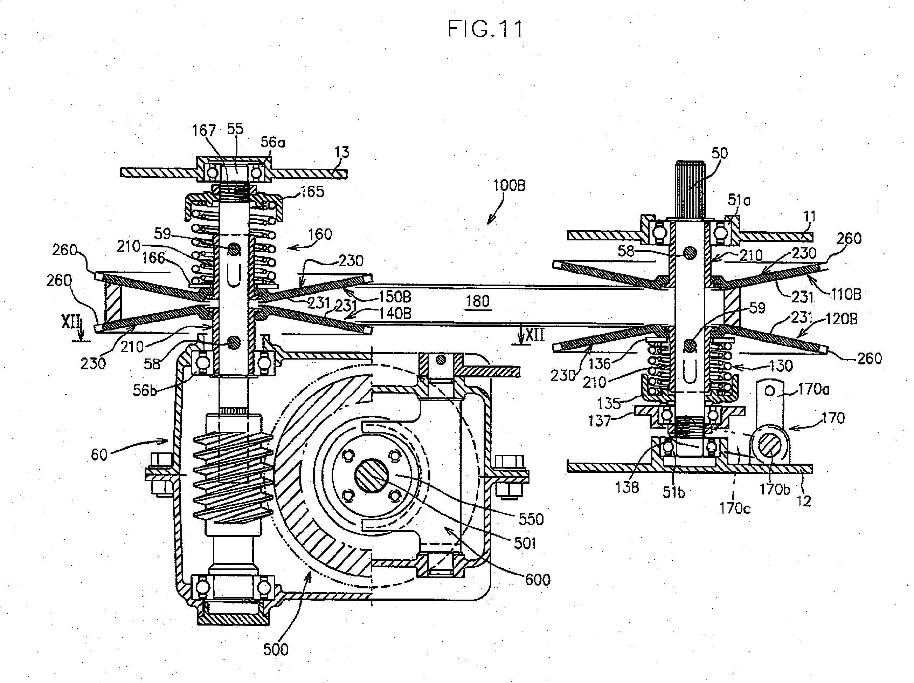

Fig. 11 illustrates a vertical cross sectional view of the CVT 100B.

The CVT 100B as well as the CVT 100 can transmit the rotational power from the driving shaft 50 to the driven shaft 55, and continuously vary the speed of the rotational power that is transmitted to the driven shaft 55.

More specifically, as shown in Fig. 11, the CVT 100B includes a driving-side fixed pulley half or pulley sheave 110B, a driving-side movable pulley half or pulley sheave 120B, the driving-side biasing member 130, a driven-side fixed pulley half or pulley sheave 140B, a driven-side movable pulley half or pulley sheave 150B, the driven-side biasing member 160, the speed-change operating mechanism 170 and the endless element 180.

The pulley sheaves 110B, 120B, 140B, 150B have the substantially same configurations as the pulley sheaves 110, 120, 140, 150, respectively, except that the main body portion 230 is formed with engaged portions 260 at an outer peripheral edge.

In the same manner as the first embodiment, the paired fixed pulley sheave 110B (140B) and the movable pulley sheave 120B (150B) arranged to face each other are supported by the corresponding shaft 50 (55) in such a manner that the distance between the respective friction surfaces 231 becomes larger as it goes from the inner side to the outer side in the radial direction.

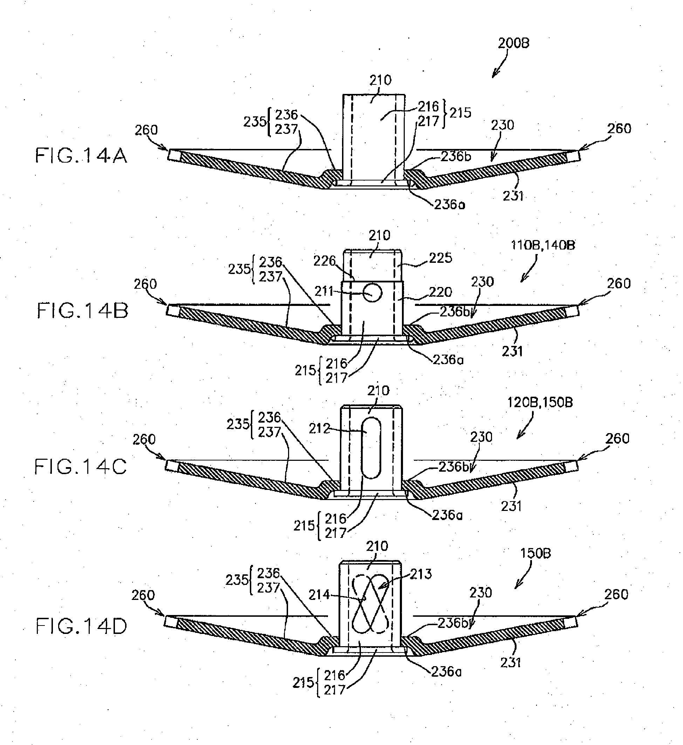

In the present embodiment, as shown in Fig. 14, the working vehicle 1B further includes a differential gear device 500 that is interposed in the traveling system power transmission path so as to be positioned on a downstream side of the CVT 1008 with respect to the power transmission direction.

The differential gear device 500 differentially transmits to paired right and left driving axles 501 the rotational power that has been input from the CVT 100B. The paired right and left rear wheels 15R functioning as the driving wheels are operatively and respectively driven by the paired driving axles 501.

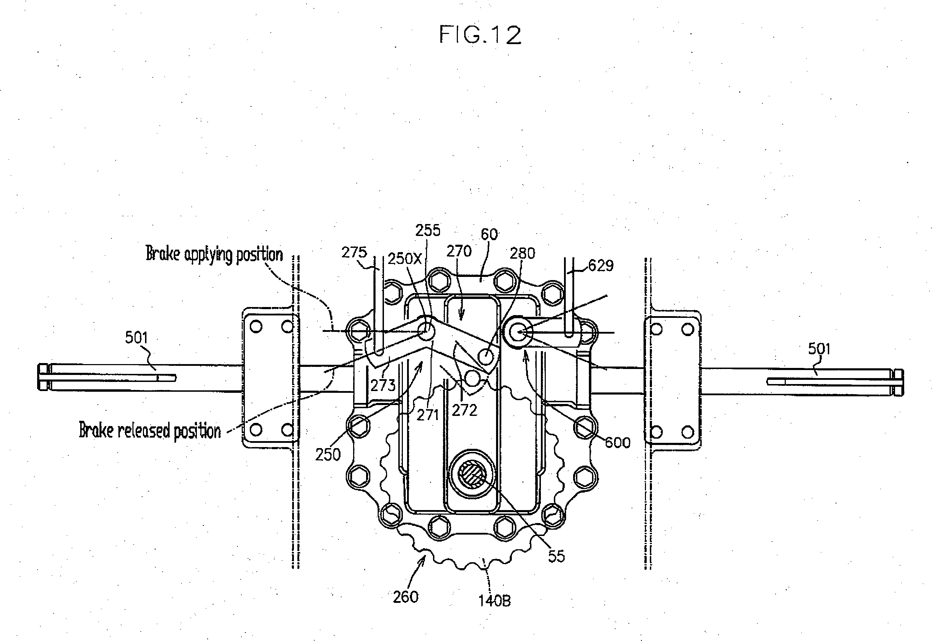

Fig. 11 also shows a switching slider 550 that switches a power transmission state of the differential gear device 500 between a differential state and a differential-lock state, and a pressing mechanism 600 that presses the switching slider 550 in accordance with an operation from an outside. The pressing mechanism 600 is operatively connected to a differential switching operating member (not shown) arranged in the vicinity of the driver's seat 20 through a suitable link mechanism 629 (see Fig. 12, which is explained later).

The brake structure 250 will be now explained.

Fig. 12 illustrates a cross sectional view taken along the line XII-XII in Fig. 11_{.}

More specifically, the brake structure 250 includes the plural engaged portions 260, a brake actuating arm 270 and an engaging portion 280. The plural engaged portions 260 are arranged over the whole outer peripheral edge of any one of the pulley sheaves 110B, 120B, 140B, 150B. The brake actuating arm 270 can be swung around a swinging axis line 250X parallel to a rotational axis line of the one pulley sheave. The engaging portion is provided at the brake actuating arm 270.

As shown in Figs. 11 and 12, in the present embodiment, the plural engaged portions 260 are provided in the driven-side fixed pulley sheave 140B.

The engaged portion 260 is formed to have a concave shape opening radially outward or a convex shape projecting radially outward. The plural engaged portions 260 are formed in such a manner that an area between the adjacent engaged portions 260 has a different radius from that of the engaged portion 260.

In the present embodiment, as shown in Fig. 12, the engaged portion 260 has a concave shape opening radially outward.

The engaging portion 280 has a shape capable of engaging with the engaged portion 260.

As described earlier, in the present embodiment, the engaged portion 260 has the concave shape opening radially outward. Accordingly, the engaging portion 280 is formed to have a convex shape.

As shown in Fig. 12, the brake actuating arm 270 can selectively take a brake applying position (shown with dashed line in Fig. 12) and a brake released position (shown with solid line in Fig. 12) around the swinging axis line 250X in accordance with an operation from an outside. When the brake actuating arm 270 is positioned at the brake applying position, the engaging portion 280 engages with any one of the plural engaged portions 260. When the brake actuating arm 270 is positioned at the brake released position, the engaging portion 280 is apart from the plural engaged portions 260.

In the present embodiment, as shown in Fig. 12, a supporting shaft 255 is provided in the vicinity of the pulley sheave 140B that is formed with the plural engaged portions 260, the shaft 255 being parallel to the rotational axis line of the pulley sheave 140B. The brake actuating arm 270 is supported by the supporting shaft 255.

In the present embodiment, the supporting shaft 255 is supported by a housing 60 that accommodates the differential gear device 500.

As shown in Fig. 12, the brake actuating arm 270 includes a proximal portion 271 which is supported by the supporting shaft 255, and a first arm portion 272 which extends radially outward from the proximal portion 271 and at which the engaging portion 280 is provided.

In the present embodiment, as shown in Fig. 12, the brake actuating arm 270 further includes a second arm portion 273 extending radially outward from the proximal portion 271. The second arm portion 273 is operatively connected through a suitable link mechanism 275 to a brake operating member (not shown) that is arrange in the vicinity of the driver's seat 20.

As explained earlier, in the CVT 100B according to the present embodiment, the engaging portion 280 provided at the brake actuating arm 270 engages with any one of the plural engaged portions 260 provided at the outer peripheral edge of one pulley sheave out of the plural pulley sheaves 110B, 120B, 140B, 150B, so that the braking force is applied to the traveling system power transmission path.

Accordingly, the CVT 100B can realize miniaturization and cost reduction with respect to the whole traveling system power transmission path in comparison with the conventional configuration that includes a brake mechanism separate from the corresponding CVT.

In the present embodiment, as described earlier, the plural engaged portions 260 are provided at the driven-side fixed pulley sheave 140B that is supported by the corresponding driven shaft 102 in a relatively immovable manner in the axis line with respect thereto.

The configuration makes it possible that the engaging portion 280 stably engages with any one of the plural engaged portions 260.

The detailed configuration of the driven-side fixed pulley sheave 140B will now be explained.

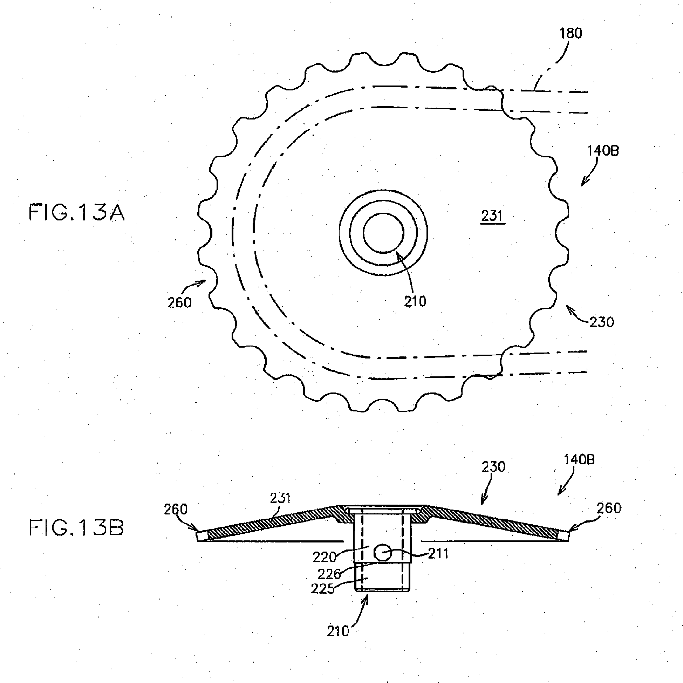

Figs. 13A and 13B illustrate a plan view and a partially vertical cross sectional side view of the driven-side fixed pulley sheave 140B, respectively.

The driving-side fixed pulley sheave 110B has the same configuration as the driven-side fixed pulley sheave 140B. Therefore, a following explanation can be also applied to the driving-side fixed pulley sheave 110B.

As shown in Figs. 13A and 13B, the driven-side fixed pulley sheave 140B includes the tubular portion 210 and the main body portion 230, the tubular portion 210 being supported by the corresponding driven shaft 55 in a relatively non-rotatable manner around the axis line with respect thereto and in an axially immovable manner along the axis line, the main body portion 230 extending radially outward from the tubular portion 210.

As shown in Fig. 13B, the tubular portion 210 is formed with the fixing hole 211 penetrating between the inner and outer circumferential surfaces thereof, and is immovable along the axis line of the corresponding driven shaft 55 by way of the pin 58 (see Fig. 11) that is inserted into the fixing hole 211.

As explained earlier, the main body portion 230 is fixed to the tubular portion 210 on one side of the tubular portion 210 in the axis line direction, and has the conical friction surface 231 inclined in such a manner as to be positioned closer to the other side in the axis line direction as it goes from the inner side to the outer side in the radial direction.

As shown in Figs. 13A and 13B, the plural engaged portions 260 are provided so as to be all over the outer peripheral edge of the main body portion thus configured.

In the present embodiment, as shown in Fig. 13B, the tubular portion 210 and the main body portion 230 are formed separately to each other. The main body portion 230 is inserted around the tubular portion 210 at one side thereof in the axis line direction and fixed thereto by welding or the like.

Also in the present embodiment, the driving-side fixed pulley sheave 110B, the driving-side movable pulley sheave 120B, the driven-side fixed pulley sheave 140B and the driven-side movable pulley sheave 150B have common base structures, thereby reducing the manufacturing cost.

More specifically, the pulley sheaves 110B, 120B, 140B, 150B are common one another in that they include pulley forming bodies 200B.

Fig. 14A illustrates a vertical cross sectional view of the pulley forming body 200B.

As shown in Fig. 14A, the pulley forming body 200B is different from the pulley forming body 200 only in that it is provided with the plural engaged portions 260.

Figs. 14B and 14C illustrate vertical cross sectional side views of the fixed pulley sheave 110B (140B) and the movable pulley sheave 120B (150B), respectively.

Furthermore, Fig. 14D illustrates a vertical cross sectional view of the movable pulley sheave 150B modified so as to have the sliding slot 213 with the cam region 214 in place of the sliding slot 212.

In the same manner as the first embodiment, the main body portion 230 and the tubular portion 210 are formed separately and fixed to each other by welding or the like.

More specifically, as shown in Figs. 14A to 14D, the main body portion 230 is made from the main body portion forming member 235 while the tubular portion 210 is made from the tubular portion forming member 215 that is separate from the main body portion forming member 235.

The main body portion forming member 235 includes the radially-inward portion 236 that is formed with the center hole having a predetermined diameter, and the radially-outward portion 237 that extends radially outward from the radially-inward portion 236 and has the friction surface 231. In this case, the plural engaged portions 260 are provided at the outer peripheral edge of the radially-outward portion 237.

### Third embodiment

Hereinafter, still another embodiment of the CVT according to the present invention will be explained, with reference to the attached drawings.

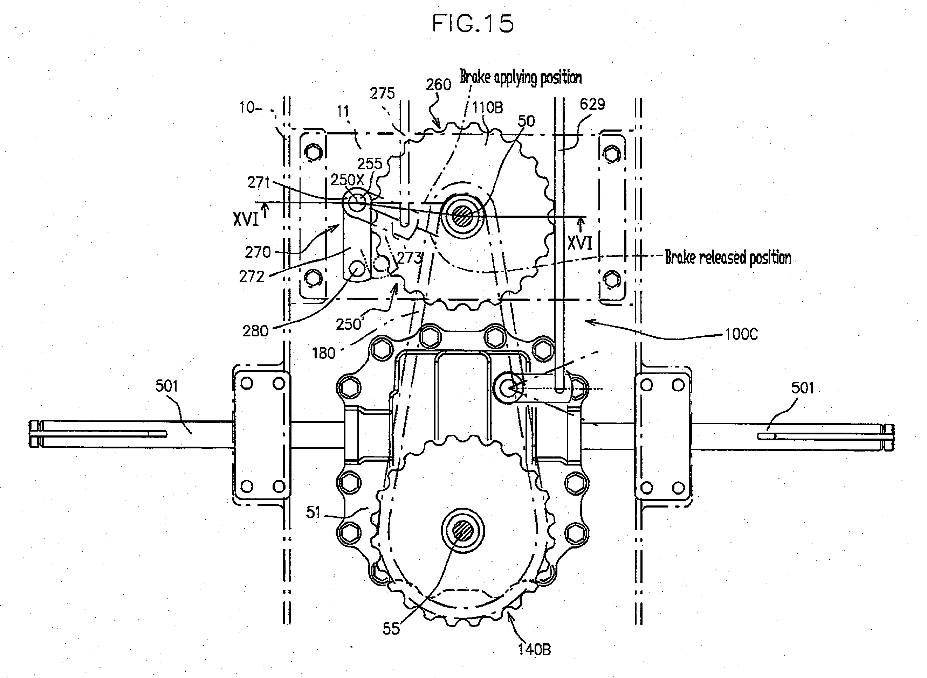

Fig. 15 illustrates a partially horizontal cross sectional view of a working vehicle to which a CVT 100C according to the present embodiment is applied. Fig. 15 corresponds to Fig. 12 in the first embodiment.

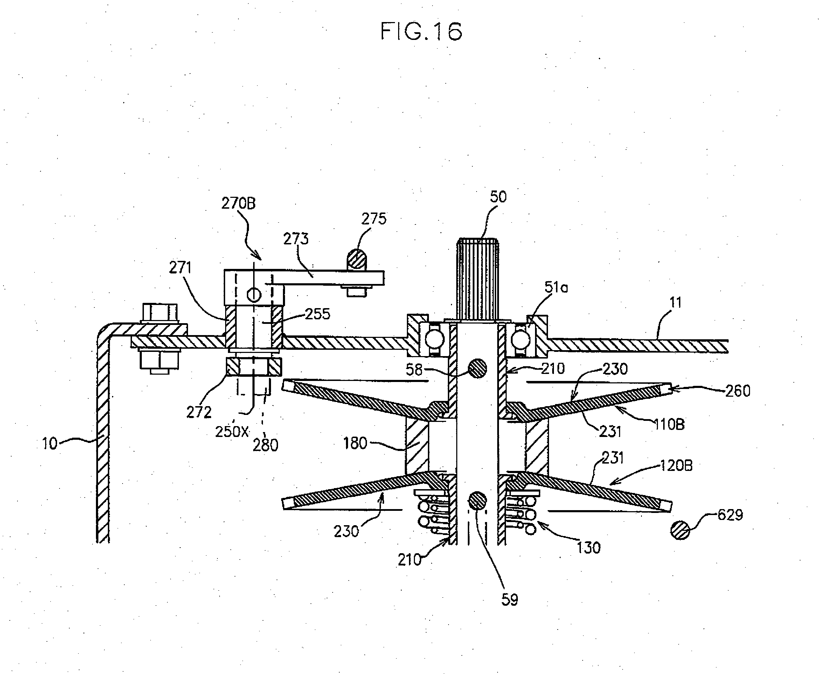

Fig.16 illustrates a cross sectional view taken along the line XVI-XVI in Fig. 15.

In the drawings, the same reference numerals are denoted for the same components as those of the aforementioned embodiments to omit the detailed explanation thereof.

The CVT 100C according to the present embodiment includes a brake structure 250' in place of the brake structure 250 in comparison with the CVT 100B according to the second embodiment.

The brake structure 250' applies the braking force to the traveling system power transmission path using the driving-side fixed pulley sheave 110B rather than the driven-side fixed pulley sheave 140B.

More specifically, in the brake structure 250', the plural engaged portions 260 are provided at the driving-side fixed pulley sheave 110B.

Also in the present embodiment, the brake actuating arm 270 is supported by the supporting shaft 255.

In the present embodiment, the supporting shaft 255 is supported by the cross member 11 so as to be positioned in the vicinity of the corresponding pulley sheave 110B and be parallel to the rotational axis of the pulley sheave 110B.

The CVT 100C according to the present embodiment can realize the same effect as the CVT 100B according to the second embodiment.

## Claims

1. A belt type continuously variable transmission (100, 100B, 100C) that continuously varies a speed of a rotational power transmitted from a driving shaft (50) to a driven shaft (55), the belt type continuously variable transmission (100) comprising a driving-side fixed pulley sheave (110, 110B) supported by the driving shaft (50) in a relatively non-rotatable manner with respect thereto and in axially immovable manner along an axis line of the driving shaft (50), a driving-side movable pulley sheave (120, 120B) supported by the driving shaft (50) in a relatively non-rotatable manner with respect thereto and in axially movable manner only within a predetermined distance while facing the driving-side fixed pulley sheave (110, 110B), a driving-side biasing member (130) pressing the driving-side movable pulley sheave (120, 120) toward the driving-side fixed pulley sheave (110, 110B), a driven-side fixed pulley sheave (140, 140B) supported by the driven shaft (55) in a relatively non-rotatable manner with respect thereto and in axially immovable manner, a driven-side movable pulley sheave (150, 150B) supported by the driven shaft (55) in a relatively non-rotatable manner with respect thereto and in axially movable manner only within a predetermined distance while facing the driven-side fixed pulley sheave (110, 110B), a driven-side biasing member (160) pressing the driven-side movable pulley sheave (150, 150B) toward the driven-side fixed pulley sheave (140, 140B), a speed-change operating mechanism (170) increasing the pressing force of the driving-side biasing member (130) in response to an operating force from an outside, and an endless member (180) having one side sandwiched by the driving-side fixed and movable pulley sheaves (110, 110B, 120, 120B) and the other side sandwiched by the driven-side fixed and movable pulley sheaves (140, 140B, 150, 150B),
wherein the four types of pulley sheaves (110, 110B, 120, 120B, 140, 140B, 150, 150B) are common one another in that each of them includes a pulley forming body (200, 200B) having a tubular portion (210) inserted around the corresponding shaft and a main body portion (230) extending radially outward from one side of the tubular portion (210) in an axis line direction, the main body portion (230) including a conical friction surface (231) inclined in such a manner as to be positioned closer to the other side of the tubular portion (210) in the axis line direction as it goes from an inner side to an outer side in a radial direction, the belt type continuously variable transmission (100) being **characterized in that**, the driven-side biasing member (160) having a pressing force larger than the driving-side biasing member (130),
the tubular portion (210) of each of the pulley forming bodies (200, 200B) that forms the driving-side and driven-side fixed pulley sheaves (110, 110B, 140, 140B) is provided with a fixing hole (211), and
the tubular portion (210) of each of the pulley forming bodies (200) that forms the driving-side and driven-side movable pulley sheaves (120, 120B, 150, 150B) is provided with a sliding slot (212, 213) that allows the tubular portion (210) to move along the axis line of the corresponding shaft (50, 55) only within the predetermined distance.

2. The belt type continuously variable transmission (100, 100B, 1000C) according to claim 1, wherein the tubular portion (210) of each of the pulley forming bodies (200, 200B) that forms the driving-side and driven-side fixed pulley sheaves (110, 110B, 140, 140B) includes a large diameter portion (220) that is positioned on one side in the axis line direction and has a large diameter, and a small diameter portion (225) that extends towards the other side in the axis line direction from the large diameter portion (220) through a step (226) and has a diameter smaller than that of the large diameter portion.

3. The belt type continuously variable transmission (100, 100B, 100C) according to claim 1 or 2, wherein the sliding slot (213) provided at the tubular portion (210) of the pulley forming body (200, 200B) that forms the driven-side movable pulley sheave (150, 150B) includes a cam region (214) that allows the tubular portion (210) to move from the one side to the other side in the axis line direction of the corresponding driven shaft (55) and also causes the tubular portion (210) to rotate from one side to the other side around the axis line of the driven shaft (55) in response to the movement of the tubular portion (210) from the one side to the other side in the axis line direction.

4. The belt type continuously variable transmission (100, 100B, 100C) according to any one of claims 1 to 3,
wherein the main body portion (230) is made from a main body portion forming member (235), and the tubular portion (210) is made from a tubular portion forming member (215) that is separate from the main body portion forming member (235)_{,}
wherein the main body portion forming member (235) includes a radially-inward portion (236) that is formed with a center hole having a predetermined diameter, and a radially-outward portion (237) that extends radially outward from the radially-inward portion (236) and has the friction surface (231),
wherein the tubular portion forming member (215) includes an inserted portion (216) that is inserted into the center hole while being come into contact with an inner circumference surface of the center hole, and a flange portion (217) that extends radially outward from one side of the inserted portion (216) in the axis line direction,
wherein the radially-inward portion (236) includes an outer surface (236a) and an inner surface (236b) that faces to one direction same as and the other direction opposite to the friction surface (231) with respect to the axis line direction,
wherein the tubular portion forming member (215) is fixed to the main body portion forming member (235) in a state where the flange portion is come into contact with the outer surface and the inserted portion (216) is inserted into the center hole, and
wherein the inner surface of the radially-inward portion (236) functions as a stopper that directly or indirectly engages with one end of the corresponding biasing member (130, 160).

5. The belt type continuously variable transmission (100, 100B, 100C) according to claim 4, wherein the radially-inward portion (236) is concaved from a radially inner end of the radially-outward portion (237), and the flange portion of the tubular portion forming member (215) is disposed within a concave portion defined by the radially-inward portion (236).

6. The belt type continuously variable transmission (100B, 100C) according to any one of claims 1 to 5, further comprising plural engaged portions (260) that are arranged over the whole outer peripheral edge of the main body portion (230) of any one of the driving-side fixed pulley sheave (110, 110B), the driving-side movable pulley sheave (120, 120B), the driven-side fixed pulley sheave (140, 140B) and the driven-side movable pulley sheave (150, 150B), the engaged portion (260) being formed into a concave shape opening radially outward or a convex shape projecting radially outward, a brake actuating arm (270) capable of being swung around a swinging axis line (250X) parallel to a rotational axis line of the one pulley sheave, and an engaging portion (280) that is provided at the brake actuating arm (270) and has a shape capable of engaging with the engaged portion (260), and
wherein the brake actuating arm (270) takes a brake applying position and a brake released position around the swinging axis line (250X) in accordance with an operation from an outside, the brake actuating arm (270) being positioned at the brake applying position so that the engaging portion (280) engages with any one of the plural engaged portions (260), and being positioned at the brake released position so that the engaging portion (280) is apart from the plural engaged portions (260).

7. The belt type continuously variable transmission (100B, 100C) according to claim 6, wherein the one pulley sheave at which the plural engaged portions (260) are arranged is the driving-side fixed pulley sheave (110, 110B) or the driven-side fixed pulley sheave (140, 140B).

## Patentansprüche

1. Stufenlos verstellbarer Riementrieb (100, 100B, 100C), der stufenlos eine Drehzahl einer Rotationskraft variiert, die von einer Antriebswelle (50) zu einer angetriebenen Welle (55) übertragen wird, wobei der stufenlos verstellbare Riementrieb (100) Folgendes umfasst: eine antriebsseitige fixe Riemenscheibe (110, 110B), die durch die Antriebswelle (50) in einer relativ mit Bezug auf sie nicht-drehbaren Weise und in einer axial unbeweglichen Weise entlang einer Achsenlinie der Antriebswelle (50) gestützt wird, eine antriebsseitige bewegliche Riemenscheibe (120, 120B), die durch die Antriebswelle (50) in einer relativ mit Bezug auf sie nicht-drehbaren Weise und in axial beweglicher Weise nur innerhalb einer zuvor festgelegten Distanz, während sie der antriebsseitigen fixen Riemenscheibe (110, 110B) zugewandt ist, gestützt wird, ein antriebsseitiges Vorspannelement (130), das die antriebsseitige bewegliche Riemenscheibe (120, 120B) in Richtung der antriebsseitigen fixen Riemenscheibe (110, 110B) drückt, eine auf der angetriebenen Seite befindliche fixe Riemenscheibe (140, 140B), die durch die angetriebene Welle (55) in einer relativ mit Bezug auf sie nichtdrehbaren Weise und in axial unbeweglicher Weise gestützt wird, eine auf der angetriebenen Seite befindliche bewegliche Riemenscheibe (150, 150B), die durch die angetriebene Welle (55) in einer relativ mit Bezug auf sie nicht-drehbaren Weise und in axial beweglicher Weise nur innerhalb einer zuvor festgelegten Distanz, während sie der auf der angetriebenen Seite befindlichen fixen Riemenscheibe (140, 140B) zugewandt ist, gestützt wird, ein auf der angetriebenen Seite befindliches Vorspannelement (160), das die auf der angetriebenen Seite befindliche bewegliche Riemenscheibe (150, 150B) in Richtung der auf der angetriebenen Seite befindlichen fixen Riemenscheibe (140, 140B) drückt, einen Drehzahländerungs-Stellmechanismus (170), der die Andrückkraft des antriebsseitigen Vorspannelements (130) in Reaktion auf eine Betätigungskraft von außerhalb erhöht, und ein Endloselement (180), dessen eine Seite zwischen der antriebsseitigen fixen und der antriebsseitigen beweglichen Riemenscheibe (110, 110B, 120, 120B) angeordnet ist und dessen andere Seite zwischen der auf der angetriebenen Seite befindlichen fixen und der auf der angetriebenen Seite befindlichen beweglichen Riemenscheibe (140, 140B, 150, 150B) angeordnet ist,
wobei die vier Arten von Riemenscheiben (110, 110B, 120, 120B, 140, 140B, 150, 150B) einander dahingehend gleich sind, als jede von ihnen einen riemenscheibenbildenden Korpus (200, 200B) umfasst, der einen röhrenförmigen Abschnitt (210) aufweist, der um die entsprechende Welle herum platziert ist, und einen Hauptkorpusabschnitt (230) aufweist, der sich radial auswärts von einer Seite des röhrenförmigen Abschnitts (210) in einer Achsenlinienrichtung erstreckt, wobei der Hauptkorpusabschnitt (230) eine konische Reibfläche (231) umfasst, die in einer solchen Weise geneigt ist, das sie der anderen Seite des röhrenförmigen Abschnitts (210) in der Achsenlinienrichtung umso näher kommt, je weiter sie in einer radialen Richtung von einer Innenseite zu einer Außenseite verläuft, wobei der stufenlos verstellbare Riementrieb (100) **dadurch gekennzeichnet ist, dass** das auf der angetriebenen Seite befindliche Vorspannelement (160) eine größere Andrückkraft als das antriebsseitige Vorspannelement (130) aufweist,
der röhrenförmige Abschnitt (210) eines jeden der riemenscheibenbildenden Körper (200, 200B), der die antriebsseitigen fixen und die auf der angetriebenen Seite befindlichen fixen Riemenscheiben (110, 110B, 140, 140B) bildet, mit einem Befestigungsloch (211) versehen ist und
der röhrenförmige Abschnitt (210) eines jeden der riemenscheibenbildenden Körper (200), der die antriebsseitigen und die auf der angetriebenen Seite befindlichen beweglichen Riemenscheiben (120, 120B, 150, 150B) bildet, mit einem Gleitschlitz (212, 213) versehen ist, der es dem röhrenförmigen Abschnitt (210) erlaubt, sich entlang der Achsenlinie der entsprechenden Welle (50, 55) nur innerhalb der zuvor festgelegten Distanz zu bewegen.

2. Stufenlos verstellbarer Riementrieb (100, 100B, 100C) nach Anspruch 1, wobei der röhrenförmige Abschnitt (210) eines jeden der riemenscheibenbildenden Körper (200, 200B), der die antriebsseitigen und die auf der angetriebenen Seite befindlichen fixen Riemenscheiben (110, 110B, 140, 140B) bildet, einen Abschnitt mit großem Durchmesser (220) umfasst, der auf einer Seite in der Achsenlinienrichtung positioniert ist und einen großen Durchmesser hat, und einen Abschnitt mit kleinem Durchmesser (225) umfasst, der sich in Richtung der anderen Seite in der Achsenlinienrichtung von dem Abschnitt mit großem Durchmesser (220) durch eine Stufe (226) hindurch erstreckt und einen Durchmesser hat, der kleiner als der des Abschnitts mit großem Durchmesser ist.

3. Stufenlos verstellbarer Riementrieb (100, 100B, 100C) nach Anspruch 1 oder 2, wobei der Gleitschlitz (213), der an dem röhrenförmigen Abschnitt (210) des riemenscheibenbildenden Korpus (200, 200B) ausgebildet ist, der die auf der angetriebenen Seite befindliche bewegliche Riemenscheibe (150, 150B) bildet, eine Nockenregion (214) umfasst, die es dem röhrenförmigen Abschnitt (210) erlaubt, sich von der einen Seite zu der anderen Seite in der Achsenlinienrichtung der entsprechenden angetriebenen Welle (55) zu bewegen, und außerdem den röhrenförmigen Abschnitt (210) veranlasst, sich von einer Seite zu der anderen Seite um die Achsenlinie der angetriebenen Welle (55) in Reaktion auf die Bewegung des röhrenförmigen Abschnitts (210) von der einen Seite zu der anderen Seite in der Achsenlinienrichtung zu drehen.

4. Stufenlos verstellbarer Riementrieb (100, 100B, 100C) nach einem der Ansprüche 1 bis 3,
wobei der Hauptkorpusabschnitt (230) aus einem hauptkorpusabschnittbildenden Element (235) besteht und der röhrenförmige Abschnitt (210) aus einem röhrenformabschnittbildenden Element (215) besteht, das von dem hauptkorpusabschnittbildenden Element (235) getrennt ist,
wobei das hauptkorpusabschnittbildende Element (235) einen radial einwärts gerichteten Abschnitt (236) umfasst, der mit einem mittigen Loch versehen ist, das einen zuvor festgelegten Durchmesser aufweist, und einen radial auswärts gerichteten Abschnitt (237) umfasst, der sich von dem radial einwärts gerichteten Abschnitt (236) radial auswärts erstreckt und die Reibfläche (231) hat, wobei das röhrenformabschnittbildende Element (215) einen eingeschobenen Abschnitt (216) umfasst, der in das mittige Loch eingeschoben ist, während er in Kontakt mit einer Innenumfangsfläche des mittigen Lochs steht, und einen Flanschabschnitt (217) umfasst, der sich radial auswärts von einer Seite des eingeschobenen Abschnitts (216) in der Achsenlinienrichtung erstreckt,
wobei der radial einwärts gerichtete Abschnitt (236) eine Außenfläche (236a) und eine Innenfläche (236b) umfasst, die in eine Richtung weist, welche die gleiche ist wie die Reibfläche (231) mit Bezug auf die Achsenlinienrichtung ist, und in die andere Richtung weist, die der Reibfläche (231) mit Bezug auf die Achsenlinienrichtung gegenüberliegt,
wobei das röhrenformabschnittbildende Element (215) an dem hauptkorpusabschnittbildenden Element (235) in einem Zustand befestigt ist, wobei der Flanschabschnitt in Kontakt mit der Außenfläche steht und der eingeschobene Abschnitt (216) in das mittige Loch eingeschoben ist, und wobei die Innenfläche des radial einwärts gerichteten Abschnitts (236) als ein Endanschlag fungiert, der direkt oder indirekt ein Ende des entsprechenden Vorspannelements (130, 160) in Eingriff nimmt.

5. Stufenlos verstellbarer Riementrieb (100, 100B, 100C) nach Anspruch 4, wobei der radial einwärts gerichtete Abschnitt (236) von einem radial inneren Ende des radial auswärts gerichteten Abschnitts (237) konkav verläuft, und der Flanschabschnitt des röhrenformabschnittbildenden Elements (215) innerhalb eines konkaven Abschnitts angeordnet ist, der durch den radial einwärts gerichteten Abschnitt (236) gebildet wird.

6. Stufenlos verstellbarer Riementrieb (100B, 100C) nach einem der Ansprüche 1 bis 5, der des Weiteren Folgendes umfasst: mehrere in Eingriff genommene Abschnitte (260), die über dem gesamten Außenumfangsrand des Hauptkorpusabschnitts (230) einer jeden der antriebsseitigen fixen Riemenscheibe (110, 110B), der antriebsseitigen beweglichen Riemenscheibe (120, 120B), der auf der angetriebenen Seite befindlichen fixen Riemenscheibe (140, 140B) und der auf der angetriebenen Seite befindlichen beweglichen Riemenscheibe (150, 150B) angeordnet sind, wobei der in Eingriff genommene Abschnitt (260) zu einer konkaven Form ausgebildet ist, die radial auswärts öffnet, oder zu einer konvexen Form ausgebildet ist, die radial auswärts hervorsteht; einen Bremsbetätigungsarm (270), der um eine Schwenkachsenlinie (250X) herum geschwenkt werden kann, die parallel zu einer Rotationsachsenlinie der einen Riemenscheibe verläuft; und einen Eingriffsabschnitt (280), der an dem Bremsbetätigungsarm (270) ausgebildet ist und eine Form hat, die den in Eingriff genommenen Abschnitt (260) in Eingriff nehmen kann, und
wobei der Bremsbetätigungsarm (270) eine Bremsbetätigungsposition und eine Bremslöseposition um die Schwenkachsenlinie (250X) gemäß einer Betätigung von außen einnimmt, wobei der Bremsbetätigungsarm (270) in der Bremsbetätigungsposition so positioniert ist, dass der Eingriffsabschnitt (280) einen der mehreren in Eingriff genommenen Abschnitte (260) in Eingriff nimmt, und in der Bremslöseposition so positioniert ist, dass der Eingriffsabschnitt (280) einen Abstand zu den mehreren in Eingriff genommenen Abschnitten (260) hält.

7. Stufenlos verstellbarer Riementrieb (100B, 100C) nach Anspruch 6, wobei die eine Riemenscheibe, an der sich die mehreren in Eingriff genommenen Abschnitte (260) befinden, die antriebsseitige fixe Riemenscheibe (110, 100B) oder die auf der angetriebenen Seite befindliche fixe Riemenscheibe (140, 140B) ist.

## Revendications

1. Transmission à variation continue de type courroie (100, 100B, 100C) qui fait varier continuellement une vitesse d'une puissance de rotation transmise par un arbre d'entraînement (50) à un arbre entraîné (55), la transmission à variation continue de type courroie (100) comprenant une roue lisse de poulie fixée côté entraînement (110, 110B) supportée par l'arbre d'entraînement (50) de manière relativement non rotative par rapport à celui-ci et de manière immobile axialement le long d'une ligne axiale de l'arbre d'entraînement (50), une roue lisse de poulie mobile côté entraînement (120, 120B) supportée par l'arbre d'entraînement (50) de manière relativement non rotative par rapport à celui-ci et de manière mobile axialement seulement sur une distance prédéterminée tout en faisant face à la roue lisse de poulie fixée côté entraînement (110, 110B), un membre de polarisation côté entraînement (130) pressant la roue lisse de poulie mobile côté entraînement (120, 12'ou) vers la roue lisse de poulie fixée côté entraînement (110, 110B), une roue lisse de poulie fixée côté entraîné (140, 140B) supportée par l'arbre entraîné (55) de manière relativement non rotative par rapport à celui-ci et de manière immobile axialement, une roue lisse de poulie mobile côté entraîné (150, 150B) supportée par l'arbre entraîné (55) de manière relativement non rotative par rapport à celui-ci et de manière mobile axialement seulement sur une distance prédéterminée tout en faisant face à la roue lisse de poulie fixée côté entraîné (140, 140B), un membre de polarisation côté entraîné (160) pressant la roue lisse de poulie mobile côté entraîné (150, 150B) vers la roue lisse de poulie fixée côté entraîné (140, 140B), un mécanisme destiné à faire fonctionner un changement de vitesses (170) augmentant la force de pression du membre de polarisation côté entraînement (130) en réponse à une force de fonctionnement provenant d'un membre extérieur, et un membre sans fin (180) qui présente un côté pris en sandwich par les roues lisses de poulie mobile et fixée côté entraînement (110, 110B, 120, 120B) et l'autre côté pris en sandwich par les roues lisses de poulie fixée et mobile côté entraîné (140, 140B, 150, 150B),
dans laquelle les quatre types de roues lisses de poulie (110, 110B, 120, 120B, 140, 140B, 150, 150B) sont communes les unes avec les autres par le fait que chacune d'elles comprend un corps formant poulie (200, 200B) qui présente une partie tubulaire (210) insérée autour de l'arbre correspondant et une partie de corps principal (230) s'étendant radialement vers l'extérieur depuis un côté de la partie tubulaire (210) dans une direction de ligne axiale, la partie de corps principal (230) comprenant une surface de frottement conique (231) inclinée de manière à être positionnée plus proche de l'autre côté de la partie tubulaire (210) dans la direction de la ligne axiale lorsqu'elle part d'un côté intérieur vers un côté extérieur dans une direction radiale, la transmission à variation continue de type courroie (100) étant **caractérisée en ce que** le membre de polarisation côté entraîné (160) présente une force de pression supérieure au membre de polarisation côté entraînement (130),
la partie tubulaire (210) de chacun des corps formant poulie (200, 200B) qui forme les roues lisses de poulie fixées côté entraînement et côté entraîné (110, 110B, 140, 140B) est prévue avec un trou de fixation (211), et la partie tubulaire (210) de chacun des corps formant poulie (200) qui forme les roues lisses de poulie mobiles côté entraînement et côté entraîné (120, 120B, 150, 150B) est prévue avec une fente de glissement (212, 213) qui permet à la partie tubulaire (210) de se déplacer le long de la ligne axiale de l'arbre correspondant (50, 55) seulement sur la distance prédéterminée.

2. Transmission à variation continue de type courroie (100, 100B, 100C) selon la revendication 1, dans laquelle la partie tubulaire (210) de chacun des corps formant poulie (200, 200B) qui forme les roues lisses de poulie fixées côté entraînement et côté entraîné (110, 110B, 140, 140B) comprend une partie de grand diamètre (220) qui est positionnée sur un côté dans la direction de la ligne axiale et présente un grand diamètre, et une partie de petit diamètre (225) qui s'étend vers l'autre côté dans la direction de la ligne axiale depuis la partie de grand diamètre (220) à travers un étage (226) et présente un diamètre plus petit que celui de la partie de grand diamètre.

3. Transmission à variation continue de type courroie (100, 100B, 100C) selon la revendication 1 ou 2, dans laquelle la fente de glissement (213) prévue au niveau de la partie tubulaire (210) du corps formant poulie (200, 200B) qui forme la roue lisse de poulie mobile côté entraîné (150, 150B) comprend une zone de came (214) qui permet à la partie tubulaire (210) de se déplacer d'un côté vers l'autre côté dans la direction de la ligne axiale de l'arbre entraîné correspondant (55) et fait également tourner la partie tubulaire (210) d'un côté vers l'autre côté autour de la ligne axiale de l'arbre entraîné (55) en réponse au déplacement de la partie tubulaire (210) d'un côté vers l'autre côté dans la direction de la ligne axiale.

4. Transmission à variation continue de type courroie (100, 100B, 100C) selon l'une quelconque des revendications 1 à 3,
dans laquelle la partie de corps principal (230) est composée d'un membre formant la partie de corps principal (235), et la partie tubulaire (210) est composée d'un membre formant la partie tubulaire (215) qui est distinct du membre formant la partie de corps principal (235), dans laquelle le membre formant la partie de corps principal (235) comprend une partie radialement tournée vers l'intérieur (236) qui est formée avec un trou central ayant un diamètre prédéterminé, et une partie radialement tournée vers l'extérieur (237) qui s'étend radialement vers l'extérieur depuis la partie radialement tournée vers l'intérieur (236) et présente la surface de frottement (231),
dans laquelle le membre formant la partie tubulaire (215) comprend une partie insérée (216) qui est insérée dans le trou central tout en venant en contact avec une surface de circonférence intérieure du trou central, et une partie de bride (217) qui s'étend radialement vers l'extérieur depuis un côté de la partie insérée (216) dans la direction de la ligne axiale,
dans laquelle la partie radialement tournée vers l'intérieur (236) comprend une surface extérieure (236a) et une surface intérieure (236b) qui fait face à une direction identique à l'autre direction opposée à la surface de frottement (231) par rapport à la direction de la ligne axiale,
dans laquelle le membre formant la partie tubulaire (215) est fixé au membre formant la partie de corps principal (235) dans un état où la partie de bride vient en contact avec la surface extérieure et la partie insérée (216) est insérée dans le trou central, et
dans laquelle la surface intérieure de la partie radialement tournée vers l'intérieur (236) fonctionne comme une butée qui s'engage directement ou indirectement avec une extrémité du membre de polarisation correspondant (130, 160).

5. Transmission à variation continue de type courroie (100, 100B, 100C) selon la revendication 4, dans laquelle la partie radialement tournée vers l'intérieur (236) est concave depuis une extrémité radialement intérieure de la partie radialement tournée vers l'extérieur (237), et la partie de bride du membre formant la partie tubulaire (215) est disposée dans une partie concave définie par la partie radialement tournée vers l'intérieur (236).

6. Transmission à variation continue de type courroie (100B, 100C) selon l'une quelconque des revendications 1 à 5, comprenant en outre plusieurs parties engagées (260) qui sont agencées sur tout le bord périphérique extérieur de la partie de corps principal (230) d'une quelconque des roues lisses parmi la roue lisse de poulie fixée côté entraînement (110, 110B), la roue lisse de poulie mobile côté entraînement (120, 120B), la roue lisse de poulie fixée côté entraîné (140, 140B) et la roue lisse de poulie mobile côté entraîné (150, 150B), la partie engagée (260) étant formée selon une forme concave s'ouvrant radialement vers l'extérieur ou une forme convexe se projetant radialement vers l'extérieur, un bras d'actionnement de frein (270) capable d'osciller autour d'une ligne d'axe oscillant (250X) parallèle à une ligne d'axe de rotation de la roue lisse de poulie quelconque, et une partie d'engagement (280) qui est prévue au niveau du bras d'actionnement de frein (270) et présente une forme capable de s'engager avec la partie engagée (260), et
dans laquelle le bras d'actionnement de frein (270) prend une position d'application de frein et une position de libération de frein autour de la ligne d'axe oscillant (250X) conformément à un fonctionnement depuis l'extérieur, le bras d'actionnement de frein (270) étant positionné sur la position d'application de frein de sorte que la partie d'engagement (280) s'engage avec une quelconque des différentes parties engagées (260), et étant positionné sur la position de libération de frein de sorte que la partie d'engagement (280) soit distante des différentes parties engagées (260).

7. Transmission à variation continue de type courroie (100B, 100C) selon la revendication 6, dans laquelle la roue lisse de poulie au niveau de laquelle plusieurs parties engagées (260) sont agencées est la roue lisse de poulie fixée côté entraînement (110, 110B) ou la roue lisse de poulie fixée côté entraîné (140, 140B).
